# EUROPEAN PATENT APPLICATION

(11) **EP 4 339 251 A1**
(43) Date of publication of application: **20.03.2024**
(21) Application number: 22807358.1
(22) Date of filing: 27.04.2022
(51) Int. Cl.: C09D 167/00, C08G 63/193, C08G 63/79

(54) **COATING RESIN COMPOSITION, POLYMER, POLYMER PRODUCTION METHOD, COATING FILM AND PRODUCTION METHOD THEREFOR**

(30) Priority: 14.05.2021 JP 2021082814
(71) Applicant: FUJIFILM Corporation, Tokyo 106-8620 (JP)
(72) Inventor: HIRONAKA, Koji, Ashigarakami-gun, Kanagawa 258-8577 (JP); OGAWA, Taiki, Ashigarakami-gun, Kanagawa 258-8577 (JP); UEHIRA, Shigeki, Ashigarakami-gun, Kanagawa 258-8577 (JP)
(74) Representative: HGF
(86) International application number: PCT/JP2022/019071
(87) International publication number: WO 2022/239656

(57) **Abstract**

Provided are a resin composition for a coating film, containing a polymer which has at least one of a structural unit represented by Formula (I-A) or a structural unit represented by Formula (I-B), and a structural unit represented by Formula (II), in which, in the polymer, a total of respective contents of the structural unit represented by Formula (I-A) and the structural unit represented by Formula (I-B) is 10% by mass or more, and a content of the structural unit represented by Formula (II) is 10% by mass or more; the polymer; a method for producing a polymer, in which a total of respective contents of the structural unit represented by Formula (I-A) and the structural unit represented by Formula (I-B) is 10% by mass or more, and a content of a structural unit represented by Formula (II-2) is 10% by mass or more; a coating film containing the polymer; and a method for forming a coating film.

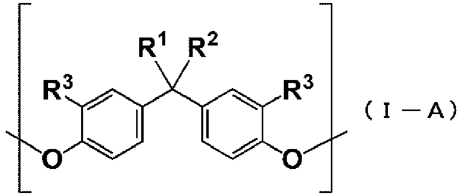

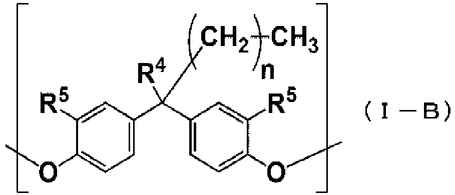

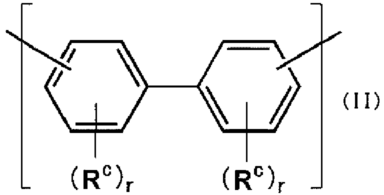

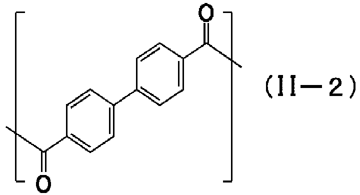

## Description

### BACKGROUND OF THE INVENTION

### 1. Field of the Invention

The present invention relates to a resin composition for coating, a polymer, a method for producing a polymer, a coating film, and a method for manufacturing the same.

### 2. Description of the Related Art

A polyester including a structural unit derived from an aromatic diol compound and a structural unit derived from an aromatic dicarboxylic acid compound, a polycarbonate including a structural unit derived from an aromatic diol compound and a structural unit derived from phosgene, or the like is excellent in heat resistance, mechanical strength, and the like, and is widely used industrially.

For example, JP2008-31347A discloses a resin for forming a coating film, containing, as a main component, a polyester composed of a residue of a divalent carboxylic acid having a biphenyl structure, a diphenyl ether structure, and a cyclohexane structure, and a residue of a dihydric phenol, in which, by controlling a free divalent carboxylic acid to 0.01 to 300 ppm, electrical properties can be stabilized in a case of being applied to a capacitor, an electrophotographic photoreceptor, and the like.

In addition, JP2003-292756A discloses a resin composition consisting of 100 parts by mass of a polymer resin composition in which 95% to 5% by mass of a polyarylate component (A) and 5% to 95% by mass of a polycarbonate component (B) are combined to be 100% by mass, and 0.01 to 1 part by mass of a silicone compound (C) having a glycidyl group with a specific structure. According to JP2003-292756A, molded articles formed of the composition have both heat resistance and transparency, and are said to be suitable for automotive lamp peripheral parts, lighting fixture reflectors, and the like.

### SUMMARY OF THE INVENTION

In industrial use of the polymer such as the polyester and the polycarbonate described above, in many cases, the polymer is molded and processed into a desired shape, or the polymer is dissolved in a solvent and applied onto a substrate to form a coating film. In addition, in order to impart desired functionality to the coating film or the like, functionality, mechanical properties, and the like of the polymer itself are improved, or the polymer is mixed with a functional material and then applied. In order to obtain a desired functional coating film by mixing the polymer with a functional material, compatibility between the polymer and the functional material is important, and it is not important not to impair film-forming properties which realize a uniform film without defects. In addition, in a case where a coating film with a small haze is obtained, the coating film can be easily applied as an optical film or the like.

An object of the present invention is to provide a resin composition for coating, which can achieve excellent film-forming properties and with which a coating film having excellent abrasion resistance can be formed, a polymer suitable as a main component, a binder, or the like for the resin composition for coating, and a suitable method for producing the same. Another object of the present invention is to provide a coating film which has excellent film-forming properties in forming the coating film and in which the coating film itself has excellent abrasion resistance, and a method for manufacturing the same.

The above-described objects of the present invention have been achieved by the following methods.
<1> A resin composition for coating, comprising:
   a polymer having at least one of a structural unit represented by Formula (I-A) or a structural unit represented by Formula (I-B), and having a structural unit represented by Formula (II),
   in which, in the polymer, a total of respective contents of the structural unit represented by Formula (I-A) and the structural unit represented by Formula (I-B) is 10% by mass or more, and a content of the structural unit represented by Formula (II) is 10% by mass or more, 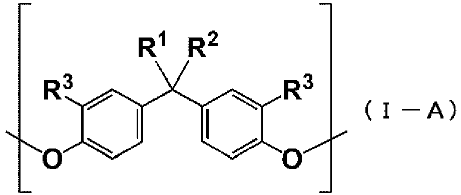
   in the formula, R¹ represents an unsubstituted chain-like branched alkyl group having 4 or more carbon atoms,
   R² represents a hydrogen atom, a linear alkyl group, or an aryl group,
   R³ represents a hydrogen atom, an alkyl group, or an aryl group,
   R¹ and R² are not bonded to each other to form a ring structure,
   a total number of carbon atoms in R¹ and two R³'s is 6 or more, and
   a substituent other than R³ is not present on two benzene rings shown in the formula, 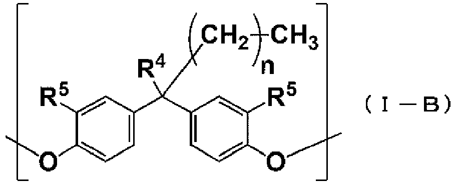
   in the formula, R⁴ represents a hydrogen atom, a linear alkyl group, or an aryl group,
   n is an integer of 2 to 20,
   R⁵ represents a hydrogen atom, an alkyl group, or an aryl group, and
   a substituent other than R⁵ is not present on two benzene rings shown in the formula, 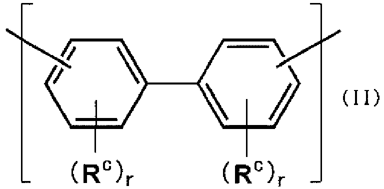
   in the formula, R^{c} represents an alkyl group, an aryl group, or a halogen atom, and r is an integer of 0 to 4.
<2> The resin composition for coating according to <1>,
   in which R² in Formula (I-A) is a hydrogen atom or an unsubstituted hydrocarbon group, and
   a content of the structural unit represented by Formula (I-A) in the polymer is 10% by mass or more.
<3> The resin composition for coating according to <2>,
   in which the content of the structural unit represented by Formula (I-A) in the polymer is 20% by mass or more.
<4> The resin composition for coating according to any one of <1> to <3>,
   in which at least a part of the structural unit represented by Formula (II) is included in the polymer as a structural unit represented by Formula (II-1), and
   a content of the structural unit represented by Formula (II-1) in the polymer is 10% by mass or more, 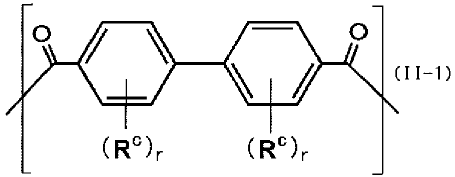
   in the formula, R^{c} and r have the same meaning as R^{c} and r in Formula (II), respectively.
<5> The resin composition for coating according to <4>,
   in which the content of the structural unit represented by Formula (II-1) in the polymer is 20% by mass or more.
<6> The resin composition for coating according to any one of <1> to <5>,
   in which, in Formula (I-A), R³ represents a hydrogen atom or an alkyl group having 1 to 4 carbon atoms, and at least one of two R³'s is an alkyl group having 1 to 4 carbon atoms, and
   in Formula (I-B), R⁵ represents a hydrogen atom or an alkyl group having 1 to 4 carbon atoms, and at least one of two R⁵'s is an alkyl group having 1 to 4 carbon atoms.
<7> The resin composition for coating according to any one of <1> to <6>,
   in which R¹ has 5 or more carbon atoms.
<8> The resin composition for coating according to any one of <1> to <6>,
   in which n is an integer of 4 to 20.
<9> The resin composition for coating according to any one of <1> to <8>, further comprising:
   a solvent.
<10> The resin composition for coating according to any one of <1> to <9>, further comprising:
   a functional material consisting of an aromatic ring-containing compound containing a benzene ring,
   in which a mass ratio of a content of the polymer to a content of the functional material is polymer/functional material = 90:10 to 50:50.
<11> A polymer comprising:
   at least one of a structural unit represented by Formula (I-A) or a structural unit represented by Formula (I-B); and
   a structural unit represented by Formula (II),
   in which a total of respective contents of the structural unit represented by Formula (I-A) and the structural unit represented by Formula (I-B) is 10% by mass or more, and
   a content of the structural unit represented by Formula (II) is 10% by mass or more, 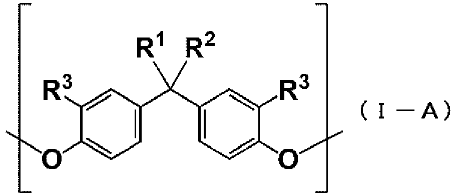
   in the formula, R¹ represents an unsubstituted chain-like branched alkyl group having 4 or more carbon atoms,
   R² represents a hydrogen atom, a linear alkyl group, or an aryl group,
   R³ represents a hydrogen atom, an alkyl group, or an aryl group,
   R¹ and R² are not bonded to each other to form a ring structure,
   a total number of carbon atoms in R¹ and two R³'s is 6 or more, and
   a substituent other than R³ is not present on two benzene rings shown in the formula, 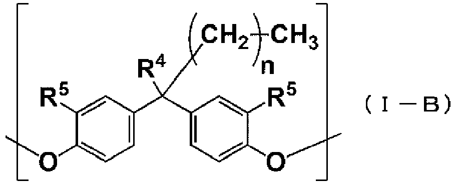
   in the formula, R⁴ represents a hydrogen atom, a linear alkyl group, or an aryl group,
   n is an integer of 2 to 20,
   R⁵ represents a hydrogen atom, an alkyl group, or an aryl group, and
   a substituent other than R⁵ is not present on two benzene rings shown in the formula, 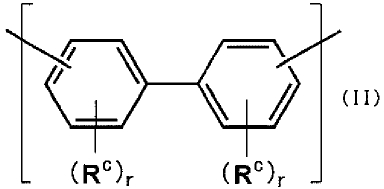
   in the formula, R^{c} represents an alkyl group, an aryl group, or a halogen atom, and r is an integer of 0 to 4.
<12> A method for producing a polymer, comprising:
   a step of mixing a mixture containing an alkaline aqueous solution of dihydric phenol and an organic solvent with solid 4,4'-biphenyldicarbonyl chloride,
   in which the polymer includes at least one of a structural unit represented by Formula (I-A) or a structural unit represented by Formula (I-B) and a structural unit represented by Formula (II-2),
   a total of respective contents of the structural unit represented by Formula (I-A) and the structural unit represented by Formula (I-B) is 10% by mass or more, and
   a content of the structural unit represented by Formula (II-2) is 10% by mass or more, 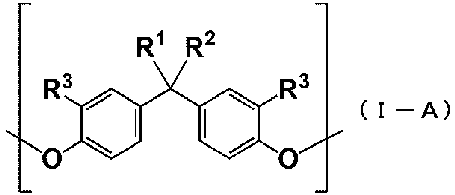
   in the formula, R¹ represents an unsubstituted chain-like branched alkyl group having 4 or more carbon atoms,
   R² represents a hydrogen atom, a linear alkyl group, or an aryl group,
   R³ represents a hydrogen atom, an alkyl group, or an aryl group,
   R¹ and R² are not bonded to each other to form a ring structure,
   a total number of carbon atoms in R¹ and two R³'s is 6 or more, and
   a substituent other than R³ is not present on two benzene rings shown in the formula, 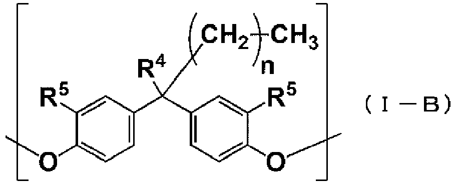
   in the formula, R⁴ represents a hydrogen atom, a linear alkyl group, or an aryl group,
   n is an integer of 2 to 20,
   R⁵ represents a hydrogen atom, an alkyl group, or an aryl group, and
   a substituent other than R⁵ is not present on two benzene rings shown in the formula 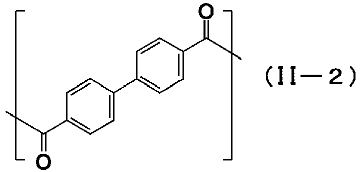
<13> A coating film comprising:
   the polymer according to <11>.
<14> A method for forming a coating film, comprising:
   coating a substrate with the resin composition for coating according to any one of <1> to <10>.

With the resin composition for coating according to the aspect of the present invention, excellent film-forming properties can be achieved and a coating film having excellent abrasion resistance can be formed. The polymer according to the aspect of the present invention is suitable as a main component, a binder, or the like for the above-described resin composition for coating. With the method for producing a polymer according to the aspect of the present invention, it is possible to efficiently obtain a polymer having a suitable molecular weight as a constituent polymer of a coating film. The coating film according to the aspect of the present invention has excellent film-forming properties and excellent abrasion resistance. With the method for forming a coating film according to the aspect of the present invention, it is possible to obtain a coating film excellent in abrasion resistance while achieving excellent film-forming properties.

### DESCRIPTION OF THE PREFERRED EMBODIMENTS

In the description of the present invention, a numerical range represented by using "to" means a range including numerical values described before and after "to" as a lower limit value and an upper limit value.

In the description of the present invention, a substituent, a linking group, or the like (hereinafter, referred to as a substituent or the like), which is not specified regarding whether to be substituted or unsubstituted, may have an appropriate substituent. Therefore, in the present specification, even in a case of being simply described as "... group" (for example, "alkyl group"), the "... group" (for example, "alkyl group") includes not only an aspect having no substituent (for example, "unsubstituted alkyl group") but also an aspect having a further substituent (for example, "substituted alkyl group"). The same applies to a compound which is not specified in the present specification regarding whether to be substituted or unsubstituted. Preferred examples of the substituent include a substituent selected from a substituent T described later.

In the description of the present invention, in a case where a plurality of substituents or the like are present or a plurality of substituents or the like are simultaneously or alternatively defined, the respective substituents or the like may be the same or different from each other. In addition, unless specified otherwise, in a case where a plurality of substituents or the like are adjacent to each other, the substituents may be linked or fused to each other to form a ring.

In the present specification, in a case where a polymer includes a plurality of constitutional components having the same representation (represented by the same general formula), the respective constitutional components may be the same or different from each other.

### [Resin composition for coating]

The resin composition for coating according to the embodiment of the present invention contains a polymer having at least one of a structural unit represented by Formula (I-A) or a structural unit represented by Formula (I-B), and having a structural unit represented by Formula (II). Hereinafter, this polymer may be simply referred to as "the above-described polymer".

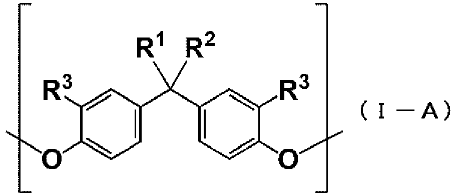

In Formula (I-A), R¹ represents an unsubstituted chain-like branched alkyl group having 4 or more carbon atoms (the chain-like branched alkyl group as R¹ does not have a substituent). The number of carbon atoms in R¹ is preferably 4 to 20, more preferably 4 to 15, still more preferably 4 to 10, and particularly preferably 4 to 8. It is also preferable that the number of carbon atoms in R¹ is 5 or more. Therefore, the number of carbon atoms in R¹ is also preferably 5 to 20, 6 to 15, 6 to 10, or 7 or 8.

Preferred specific examples of R¹ include 1-methylpropyl group, 2-methylpropyl group, 1,2-dimethylpropyl group, 2,2-dimethylpropyl group, 1-ethylpropyl group, 1-methylbutyl group, 2-methylbutyl group, 3-methylbutyl group, 1-ethylbutyl group, 2-ethylbutyl group, 1,1-dimethylbutyl group, 1,2-dimethylbutyl group, 1,3-dimethylbutyl group, 2,2-dimethylbutyl group, 3,3-dimethylbutyl group, 4-methylpentyl group, 1-ethylpentyl group, 2-ethylpentyl group, 3-ethylpentyl group, 1,3-dimethylpentyl group, 1,4-dimethylpentyl group, 2,4,4-trimethylpentyl group, 1-ethylheptyl group, 2-ethylheptyl group, 3-methylhexyl group, and 11-methyldodecyl group.

Among these, as R¹, 1-methylpropyl group, 2-methylpropyl group, 1-methylbutyl group, 3-methylbutyl group, 1-ethylpropyl group, 1-ethylbutyl group, 1-ethylpentyl group, 1-ethylhexyl group, 1-ethylheptyl group, or 2,4,4-trimethylpentyl group is preferable, and 2-methylpropyl group, 1-ethylbutyl group, 1-ethylpentyl group, 2,4,4-trimethylpentyl group, or 1-ethylheptyl group is more preferable.

R² represents a hydrogen atom, a linear alkyl group, or an aryl group.

The number of carbon atoms in the linear alkyl group which can be adopted as R² is preferably 1 to 10, more preferably 1 to 6, and still more preferably 1 to 4. The linear alkyl group which can be adopted as R² is preferably a methyl group or an ethyl group, and more preferably a methyl group.

The number of carbon atoms in the aryl group which can be adopted as R² is preferably 6 to 26, more preferably 6 to 20, still more preferably 6 to 15, particularly preferably 6 to 12, and most preferably 6 to 10. Preferred specific examples of the aryl group which can be adopted as R² include phenyl, 4-methoxyphenyl, 4-acetoxyphenyl, 1-naphthyl, and 2-naphthyl.

R² is preferably a hydrogen atom or a methyl group.

R³ represents a hydrogen atom, an alkyl group, or an aryl group.

The alkyl group which can be adopted as R³ may be any one of a linear alkyl group, a branched alkyl group, or a cyclic alkyl group. The number of carbon atoms in the alkyl group which can be adopted as R³ is preferably 1 to 10, more preferably 1 to 6, and still more preferably 1 to 4. The alkyl group which can be adopted as R³ is preferably a methyl group or an ethyl group, and more preferably a methyl group.

The aryl group which can be adopted as R³ has the same meaning as the aryl group which can be adopted as R², and the same applies to the preferred aspect thereof.

R³ is preferably a hydrogen atom or a methyl group.

In Formula (I-A), R¹ and R² are not bonded to each other to form a ring structure. In addition, the total number of carbon atoms in R¹ and two R³'s is 6 or more, preferably 6 to 20, more preferably 6 to 16, and still more preferably 6 to 13. In a case where the total number of carbon atoms in R¹ and two R³'s is 5 or less, solubility of the polymer to a solvent tends to decrease, or compatibility with a functional material tends to decrease.

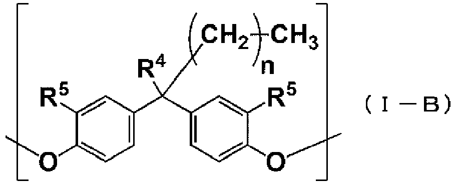

In Formula (I-B), R⁴ represents a hydrogen atom, a linear alkyl group, or an aryl group.

The linear alkyl group which can be adopted as R⁴ has the same meaning as the linear alkyl group which can be adopted as R², and the same applies to the preferred aspect thereof.

The aryl group which can be adopted as R⁴ has the same meaning as the aryl group which can be adopted as R², and the same applies to the preferred aspect thereof.

R⁵ represents a hydrogen atom, an alkyl group, or an aryl group. The alkyl group or aryl group which can be adopted as R⁵ has the same meaning as the alkyl group or aryl group which can be adopted as R³, and the same applies to the preferred aspect thereof.

R⁵ is preferably a hydrogen atom or a methyl group.

n is an integer of 2 to 20. In a case where n is 1 or less, solubility of the polymer to a solvent tends to decrease, or compatibility with a functional material tends to decrease, which makes it difficult to form a coating film and exhibit functions. n is preferably 3 to 20, more preferably 4 to 20, still more preferably 4 to 15, particularly preferably 5 to 13, and most preferably 6 to 10.

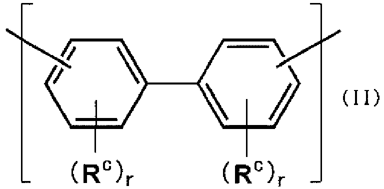

In Formula (II), R^{c} represents an alkyl group, an aryl group, or a halogen atom, and r is an integer of 0 to 4.

The alkyl group and aryl group which can be adopted as R^{c} has the same meaning as the alkyl group and aryl group which can be adopted as R³, and the same applies to the preferred aspect thereof.
r is preferably 0 or 2, and more preferably 0.

In the above-described polymer, the total of respective contents of the structural unit represented by Formula (I-A) and the structural unit represented by Formula (I-B) is 10% by mass or more, and a content of the structural unit represented by Formula (II) is 10% by mass or more. With such a constitutional component composition, physical properties having rigidity and having appropriate flexibility are achieved, and abrasion resistance of the coating film can be further enhanced. In addition, in a case where a functional material is used in combination, compatibility with the functional material can be enhanced, and desired film-forming properties can be ensured more reliably.

In the above-described polymer, the total of respective contents of the structural unit represented by Formula (I-A) and the structural unit represented by Formula (I-B) is preferably 20% by mass or more, more preferably 25% by mass or more, and still more preferably 30% by mass or more. In addition, in the above-described polymer, the total of respective contents of the structural unit represented by Formula (I-A) and the structural unit represented by Formula (I-B) is generally 70% by mass or less, preferably 65% by mass or less.

In the above-described polymer, the content of the structural unit represented by Formula (II) is preferably 20% by mass or more, more preferably 25% by mass or more, and still more preferably 30% by mass or more. In addition, in the above-described polymer, the content of the structural unit represented by Formula (II) is generally 60% by mass or less, preferably 50% by mass or less.

In a case where the above-described polymer has the structural unit represented by Formula (I-A), R² is preferably a hydrogen atom, an unsubstituted linear alkyl group, or an unsubstituted aryl group. That is, it is preferable that R¹ and R² are composed of only carbon atoms and hydrogen atoms as a whole. In such a preferred aspect, in the above-described polymer, the content of the structural unit represented by Formula (I-A) is preferably 20% by mass or more, more preferably 25% by mass or more, and still more preferably 30% by mass or more. The content is generally 70% by mass or less, preferably 65% by mass.

In the above-described polymer, it is preferable that at least a part of the structural unit represented by Formula (II) is included in the above-described polymer as a structural unit represented by Formula (II-1). In addition, in the above-described polymer, it is preferable that a content of the structural unit represented by Formula (II-1) is 10% by mass or more. In the above-described polymer, the content of the structural unit represented by Formula (II-1) is more preferably 20% by mass or more, still more preferably 25% by mass or more, and even more preferably 30% by mass or more. In the above-described polymer, the content of the structural unit represented by Formula (II-1) is usually 60% by mass or less, preferably 50% by mass or less.

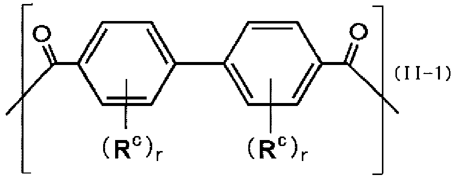

In Formula (II-1), R^{c} and r have the same meaning as R^{c} and r in Formula (II), respectively, and the same applies to the preferred aspect thereof.

Preferred examples of dicarboxylic acid which provides the structural unit represented by Formula (II-1) include 4,4'-biphenyldicarboxylic acid.

Specific examples of the structural unit represented by Formula (I-A) are shown below, but the present invention is not construed as being limited to the following specific examples. In the following formulae, Me represents methyl.

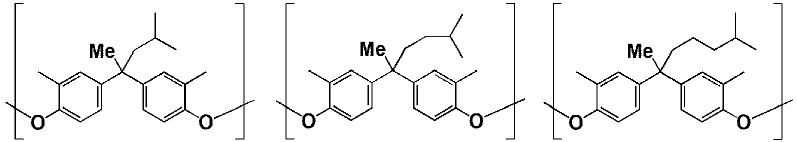

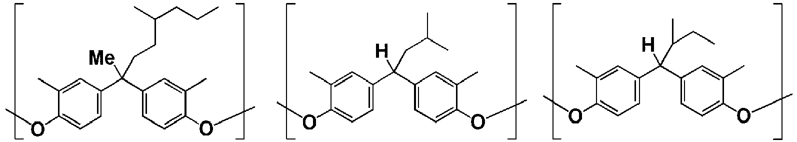

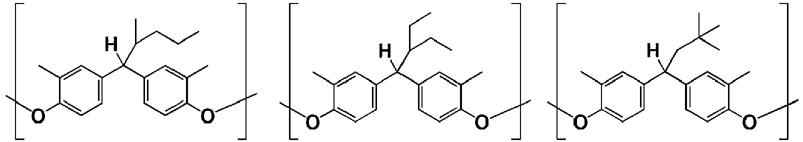

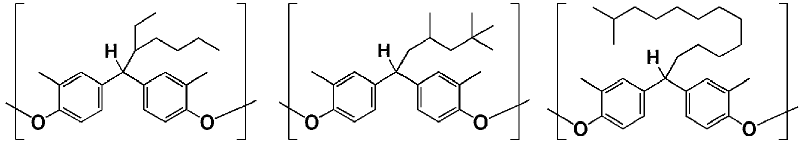

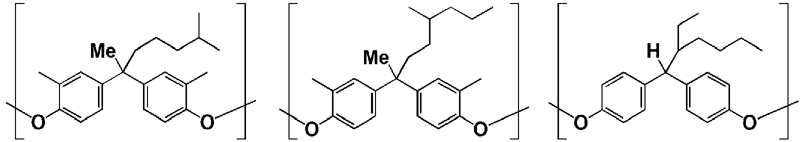

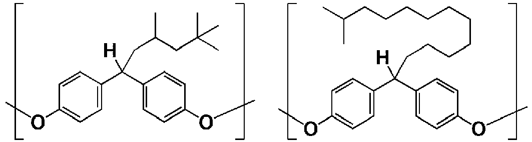

Specific examples of the structural unit represented by Formula (I-B) are shown below, but the present invention is not construed as being limited to the following specific examples.

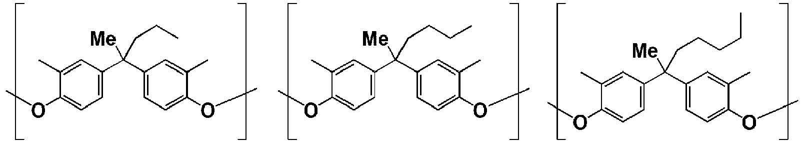

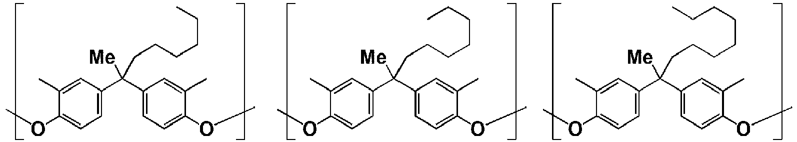

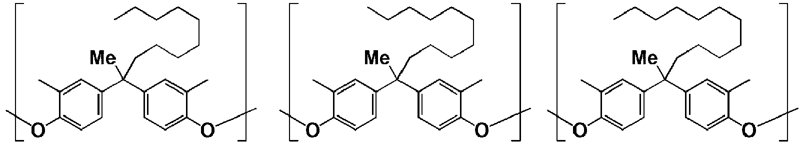

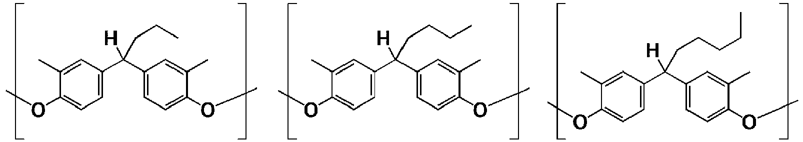

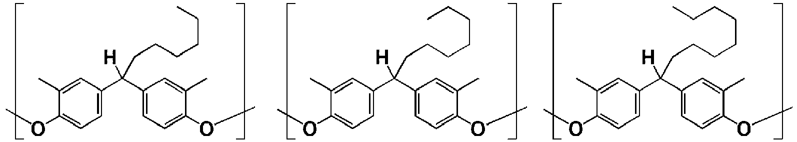

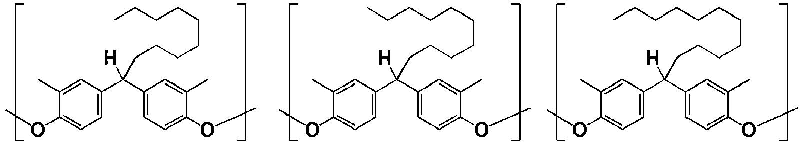

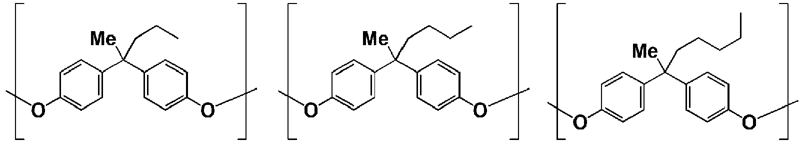

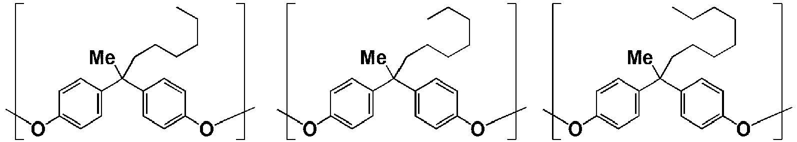

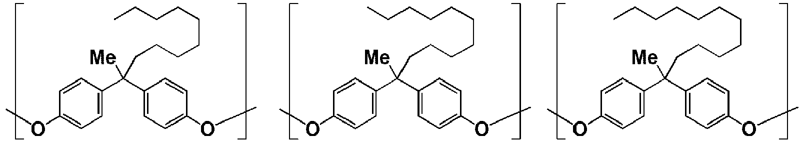

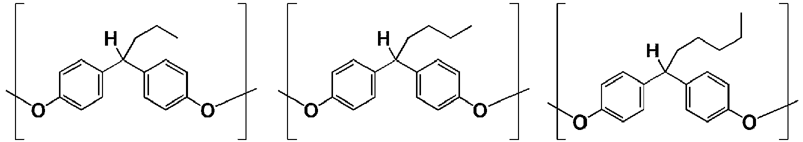

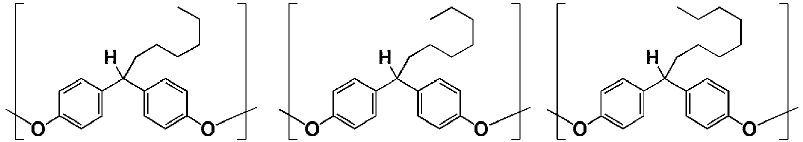

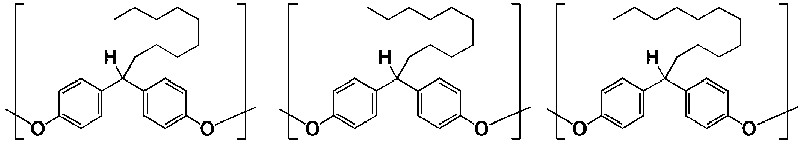

Specific examples of the structural unit represented by Formula (II) are shown below, but the present invention is not construed as being limited to the following specific examples.

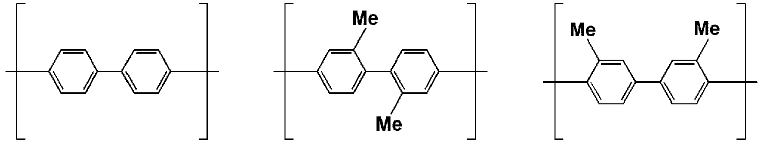

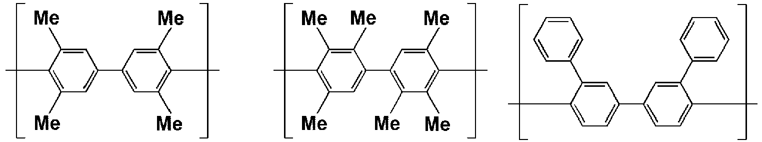

In the above-described polymer, a remainder excluding the structural units represented by each of Formulae (I-A), (I-B), and (II) can include, for example, at least one structural unit represented by Formula (I-C).

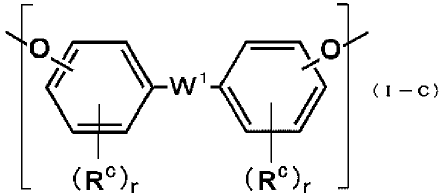

In Formula (I-C), R^{c} and r have the same meaning as R^{c} and r in Formula (II), respectively, and the same applies to the preferred aspect thereof. W¹ represents an oxygen atom, a sulfur atom, or a hydrocarbon group having 1 to 15 carbon atoms. However, the structural unit represented by Formula (I-C) is a structural unit different from the structural units represented by each of Formulae (I-A) and (I-B) described above. That is, in the present invention, even in a structure included in the structural unit represented by Formula (I-C), in a case where the structure is also included in the structural unit represented by any one of Formula (I-A) or (I-B), the structure is considered as the structural unit represented by any one of Formula (I-A) or (I-B), not the structural unit represented by Formula (I-C).

The hydrocarbon group having 1 to 15 carbon atoms, which can be adopted as W¹, is preferably a hydrocarbon group having 1 to 12 carbon atoms and more preferably a hydrocarbon group having 1 to 10 carbon atoms.

Examples of a dihydric phenol compound which derives the structural unit represented by Formula (I-C) include 1,1-bis(4-hydroxyphenyl)methane, 1,1-bis(4-hydroxyphenyl)ethane, 1,1-bis(4-methyl-2-hydroxyphenyl)methane, 1,1-bis(3,5-dimethyl-4-hydroxyphenyl)methane (TM bisphenol F), 1,1-bis(4-hydroxyphenyl)cyclohexane (bisphenol Z), 2,2-bis(4-hydroxyphenyl)propane (bisphenol A), 2,2-bis(3-methyl-4-hydroxyphenyl)propane (bisphenol C), 2,2-bis(3,5-dimethyl-4-hydroxyphenyl)propane (TM bisphenol A), 1,1-bis(4-hydroxyphenyl)-1-phenylethane, 2,2-bis(3-phenyl-4-hydroxyphenyl)propane, 1,1-bis(3-methyl-4-hydroxyphenyl)methane, 4,4'-biphenol, 2,2-bis(4-hydroxyphenyl)butane, 1,1-bis(4-hydroxyphenyl)-2-methylpropane, 1,1-bis(4-hydroxyphenyl)-1-phenylmethane, 1,1-bis(3-methyl-4-hydroxyphenyl)cyclohexane, 2,2-bis(3-allyl-4-hydroxyphenyl)propane, 2,2-bis(3-isopropyl-4-hydroxyphenyl)propane, 2,2-bis(3-tert-butyl-4-hydroxyphenyl)propane, 2,2-bis(3-sec-butyl-4-hydroxyphenyl)propane, bisphenol fluorene, 1,1-bis(2-methyl-4-hydroxy-5-tert-butylphenyl)-2-methylpropane, 4,4'-[1,4-phenylene-bis(2-propylidene)-bis(3-methyl-4-hydroxyphenyl)], 1,1-bis(3-phenyl-4-hydroxyphenyl)cyclohexane, 4,4'-dihydroxyphenyl ether, bis(2-hydroxyphenyl)methane, 2,4'-methylenebisphenol, bis(3-methyl-4-hydroxyphenyl)methane, bis(4-hydroxyphenyl)propane, 1,1-bis(2-hydroxy-5-methylphenyl)ethane, 1,1-bis(4-hydroxyphenyl)-3-methylbutane, bis(2-hydroxy-3,5-dimethylphenyl)methane, 1,1-bis(4-hydroxyphenyl)cyclopentane, 1,1-bis(3-methyl-4-hydroxyphenyl)cyclopentane, 3,3-bis(4-hydroxyphenyl)pentane, 3,3-bis(3-methyl-4-hydroxyphenyl)pentane, 3,3-bis(3,5-dimethyl-4-hydroxyphenyl)pentane, 2,2-bis(2-hydroxy-3,5-dimethylphenyl)propane, 1,1-bis(3-methyl-4-hydroxyphenyl)-1-phenylethane, 1,1-bis(3,5-dimethyl-4-hydroxyphenyl)cyclohexane, bis(2-hydroxy-3-tert-butyl-5-methylphenyl)methane, bis(4-hydroxyphenyl)diphenylmethane, terpene diphenol, 1,1-bis(3-tert-butyl-4-hydroxyphenyl)cyclohexane, 1,1-bis(2-methyl-4-hydroxy-5-tert-butylphenyl)-2-methylpropane, 2,2-bis(3-cyclohexyl-4-hydroxyphenyl)propane, 1,1-bis(3,5-di-tert-butyl-4-hydroxyphenyl)methane, 1,1-bis(3,5-di-sec-butyl-4-hydroxyphenyl)methane, 1,1-bis(3-cyclohexyl-4-hydroxyphenyl)cyclohexane, 1,1-bis(2-hydroxy-3,5-di-tert-butylphenyl)ethane, bis(3-nonyl-4-hydroxyphenyl)methane, 2,2-bis(3,5-di-tert-butyl-4-hydroxyphenyl)propane, bis(2-hydroxy-3, 5-di-tert-butyl-6-methylphenyl)methane, 1,1-bis(3-phenyl-4-hydroxyphenyl)-1-phenylethane, bis(3-fluoro-4-hydroxyphenyl)methane, bis(2-hydroxy-5-fluorophenyl)methane, 2,2-bis(4-hydroxyphenyl)-1,1,1,3,3,3-hexafluoropropane, 2,2-bis(3-fluoro-4-hydroxyphenyl)propane, bis(3-fluoro-4-hydroxyphenyl)-phenylmethane, bis(3-fluoro-4-hydroxyphenyl)-(p-fluorophenyl)methane, bis(4-hydroxyphenyl)-(p-fluorophenyl)methane, 2,2-bis(3-chloro-4-hydroxy-5-methylphenyl)propane, 2,2-bis(3,5-dichloro-4-hydroxyphenyl)propane, 2,2-bis(3-chloro-4-hydroxyphenyl)propane, 1,1-bis(3,5-dibromo-4-hydroxyphenyl)methane, 2,2-bis(3,5-dibromo-4-hydroxyphenyl)propane, 2,2-bis(3-nitro-4-hydroxyphenyl)propane, 3,3'-dimethyl-4,4'-biphenol, 3,3',5,5'-tetramethyl-4,4'-biphenol, 3,3',5,5'-tetra-tert-butyl-4,4'-biphenol, bis(4-hydroxyphenyl)ketone, 3,3'-difluoro-4,4'-biphenol, 3,3',5,5'-tetrafluoro-4,4'-biphenol, bis(4-hydroxyphenyl)dimethylsilane, bis(3-methyl-4-hydroxyphenyl)ether, bis(3,5-dimethyl-4-hydroxyphenyl)ether, bis(2,3,5-trimethyl-4-hydroxyphenyl)-phenylmethane, 1,1-bis(3-tert-butyl-4-hydroxyphenyl)-1-phenylethane, 1,1-bis(3,5-di-tert-butyl-4-hydroxyphenyl)-1-phenylethane, 1,1-bis(2-methyl-4-hydroxy-5-cyclohexylphenyl)-2-methylpropane, 1,1-bis(2-hydroxy-3,5-di-tert-butylphenyl)ethane, isatin bisphenol, isatin bis-cresol, 2,2',3,3',5,5'-hexamethyl-4,4'-biphenol, bis(2-hydroxyphenyl)methane, 2,4'-methylenebisphenol, 1,2-bis(4-hydroxyphenyl)ethane, 2-(4-hydroxyphenyl)-2-(2-hydroxyphenyl)propane, bis(2-hydroxy-3-allylphenyl)methane, 1,1-bis(2-hydroxy-3,5-dimethylphenyl)-2-methylpropane, 1,1-bis(2-hydroxy-5-tert-butylphenyl)ethane, bis(2-hydroxy-5-phenyl)methane, bis(2-methyl-4-hydroxy-5-cyclohexylphenyl)methane, 1,2-bis(3,5-di-tert-butyl-4-hydroxyphenyl)ethane, bis(2-hydroxy-3,5-di-tert-butylphenyl)methane, 2,2-bis(3-styryl-4-hydroxyphenyl)propane, 1,1-bis(4-hydroxyphenyl)-1-(p-nitrophenyl)ethane, bis(3,5-difluoro-4-hydroxyphenyl)methane, bis(3,5-difluoro-4-hydroxyphenyl)phenylmethane, bis(3,5-difluoro-4-hydroxyphenyl)diphenylmethane, bis(3-fluoro-4-hydroxyphenyl)diphenylmethane, 2,2-bis(3-chloro-4-hydroxyphenyl)propane, 3,3',5,5'-tetra-tert-butyl-2,2'-biphenol, 2,2'-diallyl-4,4'-biphenol, 1,1-bis(4-hydroxyphenyl)-3,3,5-trimethyl-cyclohexane, 1,1-bis(4-hydroxyphenyl)-3,3,5,5-tetramethyl-cyclohexane, 1,1-bis(4-hydroxyphenyl)-3,3,4-trimethyl-cyclohexane, 1,1-bis(4-hydroxyphenyl)-3,3-dimethyl-5-ethyl-cyclohexane, 1,1-bis(4-hydroxyphenyl)-3,3,5-trimethyl-cyclopentane, 1,1-bis(3,5-dimethyl-4-hydroxyphenyl)-3,3,5-trimethyl-cyclohexane, 1,1-bis(3,5-diphenyl-4-hydroxyphenyl)-3,3,5-trimethyl-cyclohexane, 1,1-bis(3-methyl-4-hydroxyphenyl)-3,3,5-trimethyl-cyclohexane, 1,1-bis(3-phenyl-4-hydroxyphenyl)-3,3,5-trimethyl-cyclohexane, 1,1-bis(3,5-dichloro-4-hydroxyphenyl)-3,3,5-trimethyl-cyclohexane, 9,9-bis(4-hydroxyphenyl)fluorene, 9,9-bis(3-methyl-4-hydroxyphenyl)fluorene, 1,1-bis(3,5-dibromo-4-hydroxyphenyl)-3,3,5-trimethyl-cyclohexane, bis(4-hydroxyphenyl)sulfone, bis(2-hydroxyphenyl)sulfone, bis(3,5-dimethyl-4-hydroxyphenyl)sulfone, bis(3,5-diethyl-4-hydroxyphenyl)sulfone, bis(3-methyl-4-hydroxyphenyl)sulfone, bis(3-ethyl-4 -hydroxyphenyl)sulfone, bis(4-hydroxyphenyl)sulfide, bis(3,5-dimethyl-4-hydroxyphenyl)sulfide, bis(3,5-diethyl-4-hydroxyphenyl)sulfide, bis(3-methyl-4-hydroxyphenyl)sulfide, bis(3-ethyl-4-hydroxyphenyl)sulfide, 2,4-dihydroxydiphenylsulfone, 4,4'-(α-methylbenzylidene)bisphenol, 1,1-bis(4-hydroxy-3-methylphenyl)-ethane, and bisphenol E. That is, the structural unit represented by Formula (I-C) can be described from the above-described dihydric phenol compounds.

Among the above-described dihydric phenol compounds, from the viewpoint of further enhancing the abrasion resistance of the coating film, a structural unit described from a compound selected from 4,4'-(α-methylbenzylidene)bisphenol, 1,1-bis(4-hydroxy-3-methylphenyl)-ethane, bisphenol E, bisphenol C, or bisphenol Z is preferable.

In the above-described polymer, a content of the structural unit represented by Formula (I-C) is preferably 0% to 40% by mass, more preferably 0% to 30% by mass, and still more preferably 0% to 20% by mass.

In the above-described polymer, it is also preferable that a remainder excluding the structural units represented by each of Formulae (I-A), (I-B), (II), and (I-C) includes, for example, a structural unit derived from dicarboxylic acid described below:
4,4'-diphenyl ether dicarboxylic acid, 1,4-cyclohexanedicarboxylic acid, terephthalic acid, isophthalic acid, orthophthalic acid, 1,4-naphthalenedicarboxylic acid, 2,3-naphthalenedicarboxylic acid, 2,6-naphthalenedicarboxylic acid, adipic acid, pimelic acid, suberic acid, azelaic acid, sebacic acid, undecanedioic acid, dodecanedioic acid, tridecanedioic acid, tetradecanedioic acid, pentadecanedioic acid, octadecanedioic acid, nonadecanedioic acid, and eicosanedioic acid.

Among the structural units derived from dicarboxylic acid described above, from the viewpoint of further enhancing the abrasion resistance of the photosensitive layer, a structural unit derived from 4,4'-diphenyl ether dicarboxylic acid, 2,6-naphthalenedicarboxylic acid, or terephthalic acid is preferable.

In the above-described polymer, a content of the structural unit derived from the above-described dicarboxylic acid, other than the structural unit represented by Formula (II-1) described above, is preferably 10% to 60% by mass, more preferably 20% to 50% by mass, and still more preferably 30% to 50% by mass.

The above-described polymer preferably has a terminal structure represented by Formula (IV-1) or (IV-2).

*-O-R^{a} (IV-1)

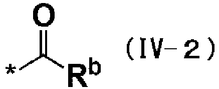

In the formulae, R^{a} and R^{b} represent a monovalent organic group. In Formula (IV-1), R^{a} is bonded to the oxygen atom in Formula (IV-1) by a carbon atom in R^{a}, and in Formula (IV-2), R^{b} is bonded to the carbonyl group in Formula (IV-2) by a carbon atom in R^{b}. It is preferable that R^{a} and R^{b} have no fluorine atom. * represents a bonding site. In the following formulae, * represents a bonding site.

The monovalent organic group which can be adopted as R^{a} and R^{b} is preferably an alkyl group or an aryl group. The alkyl group which can be adopted as R^{a} and R^{b} may be linear or branched, and the number of carbon atoms thereof (in a case of having a substituent, the number of carbon atoms including the substituent) is preferably 1 to 13, more preferably 1 to 8, also preferably 1 to 6 or 1 to 3. In a case where R^{a} and R^{b} are alkyl groups, from the viewpoint of abrasion resistance, the alkyl groups preferably have a small number of carbon atoms.

The number of carbon atoms in the aryl group which can be adopted as R^{a} and R^{b} (in a case of having a substituent, the number of carbon atoms including the substituent) is preferably 6 to 30, more preferably 6 to 25, still more preferably 6 to 20, particularly preferably 6 to 15, and most preferably 6 to 12. The aryl group which can be adopted as R^{a} and R^{b} is preferably a phenyl group.

The terminal structure represented by Formula (IV-1) is preferably represented by Formula (IV-1-1).

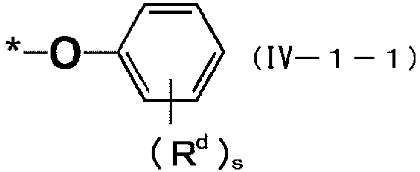

In the formula, R^{d} represents an alkyl group, an aryl group, an alkoxy group, an aryloxy group, an alkoxycarbonyl group, an aryloxycarbonyl group, an acyloxy group (preferably an alkylcarbonyloxy group or an arylcarbonyloxy group, and more preferably an alkylcarbonyloxy group), or a halogen atom, and s is an integer of 0 to 5.

R^{d} is preferably an alkyl group, an alkoxy group, an alkoxycarbonyl group, or an acyloxy group, more preferably an alkyl group or an alkoxy group, and still more preferably an alkyl group.

The alkyl group which can be adopted as R^{d} may be any one of a linear alkyl group, a branched alkyl group, or a cyclic alkyl group. The number of carbon atoms in the alkyl group which can be adopted as R^{d} (in a case of having a substituent, the number of carbon atoms including the substituent) is preferably 1 to 10, more preferably 1 to 6, and still more preferably 1 to 4. The alkyl group which can be adopted as R^{d} is preferably a methyl group or a t-butyl group, and more preferably a methyl group. In a case where R^{d} is a methyl group, s is preferably 2 or 3 and more preferably 3.

The number of carbon atoms in the aryl group which can be adopted as R^{d} (in a case of having a substituent, the number of carbon atoms including the substituent) is preferably 6 to 26, more preferably 6 to 20, still more preferably 6 to 15, particularly preferably 6 to 12, and most preferably 6 to 10. Preferred specific examples of the aryl group which can be adopted as R^{d} include a phenyl group, a 4-methoxyphenyl group, a 4-acetoxyphenyl group, a 1-naphthyl group, and a 2-naphthyl group.

The number of carbon atoms in the alkoxy group, alkoxycarbonyl group, and acyloxy group which can be adopted as R^{a} and R^{b} (in a case of having a substituent, the number of carbon atoms including the substituent) is preferably 1 to 10, more preferably 1 to 4, and still more preferably 1 or 2. For the alkoxycarbonyl group and the acyloxy group, this preferred number of carbon atoms is the number of carbon atoms excluding the carbon atom forming the carbonyl group in each group.

The number of carbon atoms in the aryloxy group and aryloxycarbonyl group which can be adopted as R^{d} (in a case of having a substituent, the number of carbon atoms including the substituent) is preferably 6 to 30, more preferably 6 to 25, still more preferably 6 to 20, particularly preferably 6 to 15, and most preferably 6 to 12. The aryl group which can be adopted as R^{d} is preferably a phenyl group, a 4-methoxyphenyl group, or a 4-acetoxyphenyl group, and more preferably a phenyl group.

s is preferably an integer of 0 to 3.

Examples of a preferred terminal structure represented by Formula (IV-1) or (IV-1-1) include structures represented by the following formulae.

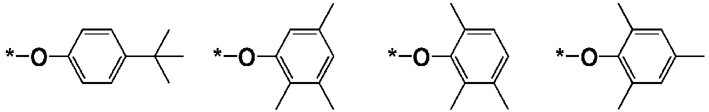

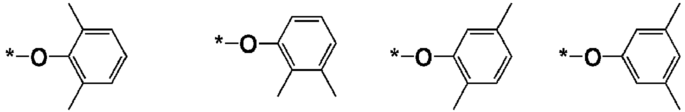

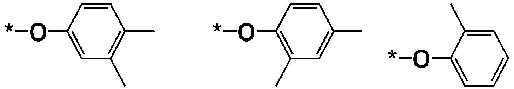

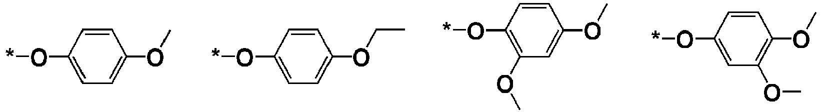

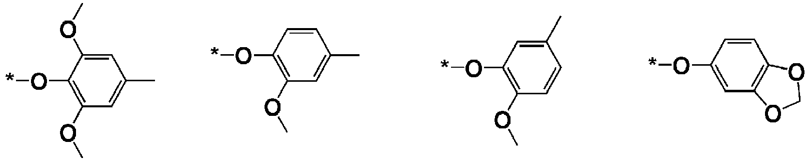

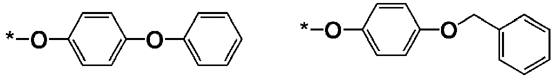

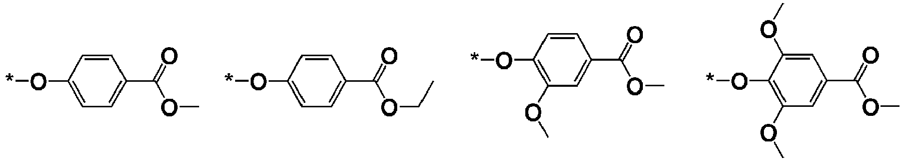

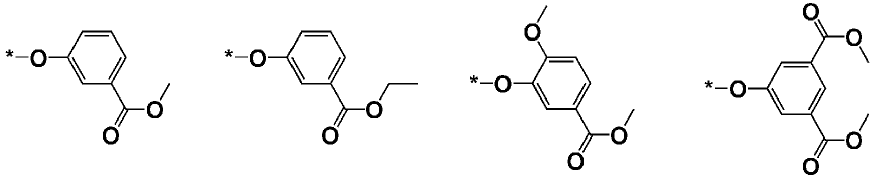

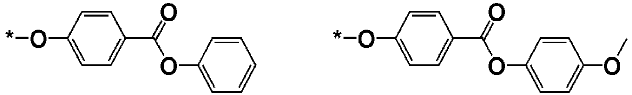

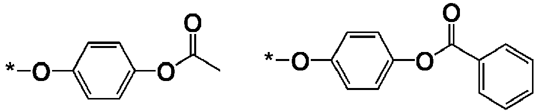

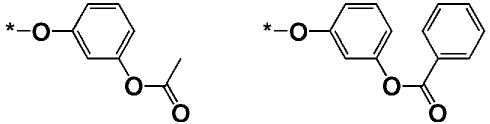

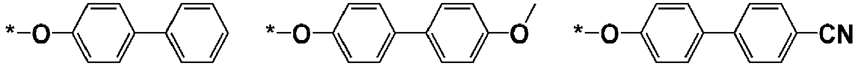

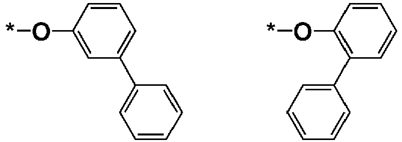

Examples of a preferred terminal structure represented by Formula (IV-2) include structures represented by the following formulae.

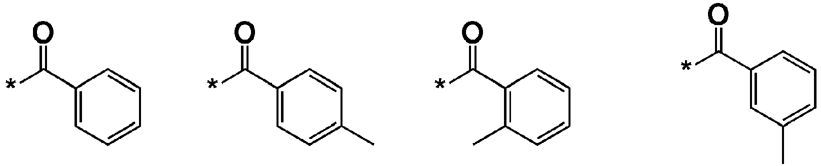

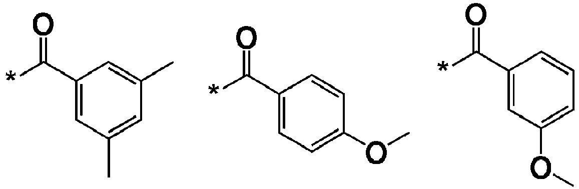

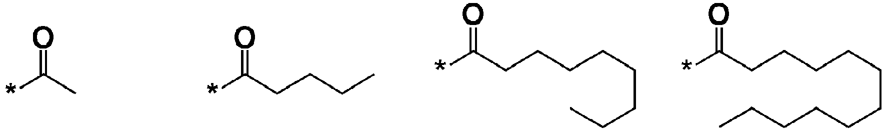

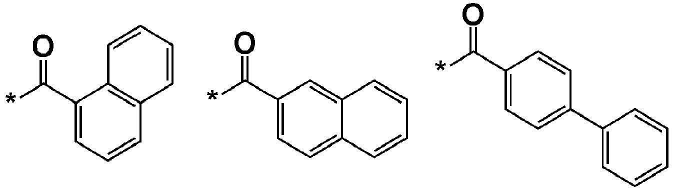

Examples of a terminal structure other than Formula (IV-1) or (IV-2) include structures represented by the following formulae.

*-H

*-O-H

It is preferable that the terminal structure represented by *-H or *-O-H is not included, but in a case of including the terminal structure, an amount thereof in the entire terminal structure of the above-described polymer is preferably 50 mol% or less, more preferably 30 mol% or less, and still more preferably 10 mol% or less.

In a case where the polymer according to the embodiment of the present invention has the structural unit represented by Formula (I-A) described above as an end portion structure, the terminal thereof is represented, for example, as follows.

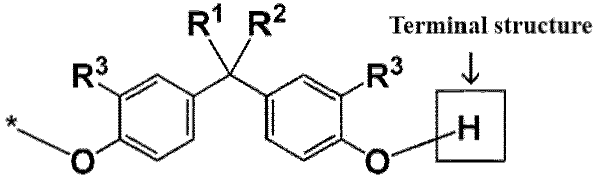

In a case where the polymer according to the embodiment of the present invention has the structural unit represented by Formula (I-B) described above as an end portion structure, the terminal thereof is represented, for example, as follows.

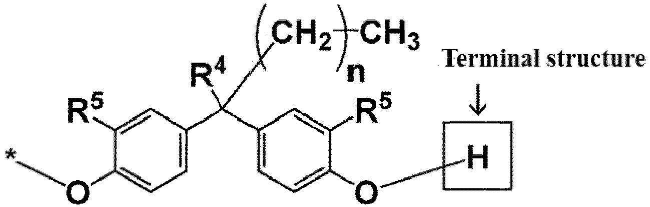

In a case where the polymer according to the embodiment of the present invention has the structural unit represented by Formula (II) (Formula (II-1)) described above as an end portion structure, the terminal thereof is represented, for example, as follows.

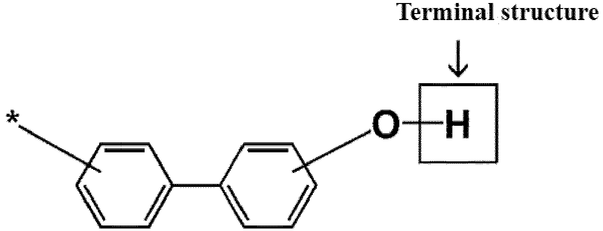

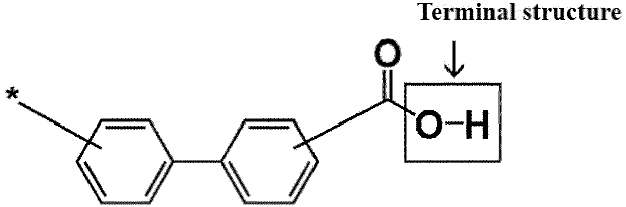

In a case where the polymer according to the embodiment of the present invention has the structural unit represented by Formula (I-C) described above as an end portion structure, the terminal thereof is represented, for example, as follows.

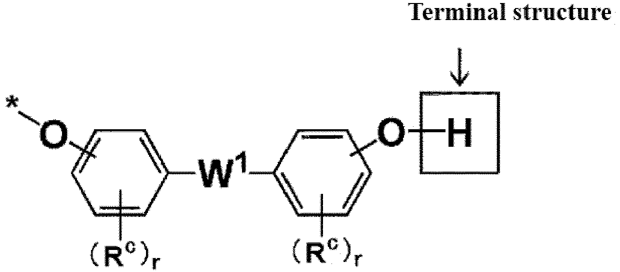

In the entire terminal structure of the above-described polymer, the total amount of the terminal structure represented by Formula (IV-1) or (IV-2) is preferably 50 to 100 mol%, more preferably 70 to 100 mol%, and still more preferably 90 to 100 mol%.

The terminal structure represented by Formula (IV-1) or (IV-2) can be introduced, for example, by using a monohydric phenol compound or a monovalent carboxylic acid chloride as a terminal blocking agent in a solution polymerization method or an interfacial polymerization method. In addition, the terminal structure represented by Formula (IV-2) can also be introduced by, after obtaining a polymer having a phenolic hydroxyl group as a terminal structure, acylating the phenolic hydroxyl group in a polymer reaction.

A weight-average molecular weight of the above-described polymer is preferably 50,000 to 250,000, more preferably 80,000 to 180,000, and still more preferably 100,000 to 150,000.

In the present invention, unless otherwise specified, a molecular weight of a polymer means a weight-average molecular weight. The weight-average molecular weight can be determined as a polystyrene-equivalent molecular weight by gel permeation chromatography (GPC). As an eluent, due to solubility of the polymer according to the embodiment of the present invention in a solvent, tetrahydrofuran can be preferably used. The above-described preferred range of the weight-average molecular weight is based on a weight-average molecular weight in terms of polystyrene in a case where tetrahydrofuran is used as the eluent.

Examples of the substituent T include:
an alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, or 1-carboxymethyl); an alkenyl group (preferably an alkenyl group having 2 to 20 carbon atoms, for example, vinyl, allyl, or oleyl); an alkynyl group (preferably an alkynyl group having 2 to 20 carbon atoms, for example, ethynyl, butadiynyl, or phenyl-ethynyl); a cycloalkyl group (preferably a cycloalkyl group having 3 to 20 carbon atoms, for example, cyclopropyl, cyclopentyl, cyclohexyl, or 4-methylcyclohexyl); an aryl group (preferably an aryl group having 6 to 26 carbon atoms, for example, phenyl, 1-naphthyl, 4-methoxyphenyl, 2-chlorophenyl, or 3-methylphenyl); a heterocyclic group (preferably a heterocyclic group having 2 to 20 carbon atoms and more preferably a 5- or 6-membered heterocyclic group having at least one oxygen atom, sulfur atom, or nitrogen atom; the heterocyclic group includes an aromatic heterocyclic group and an aliphatic heterocyclic group; for example, a tetrahydropyran ring group, a tetrahydrofuran ring group, 2-pyridyl, 4-pyridyl, 2-imidazolyl, 2-benzimidazolyl, 2-thiazolyl, or 2-oxazolyl); an alkoxy group (preferably an alkoxy group having 1 to 20 carbon atoms, for example, methoxy, ethoxy, isopropyloxy, or benzyloxy); an aryloxy group (preferably an aryloxy group having 6 to 26 carbon atoms, for example, phenoxy, 1-naphthyloxy, 3-methylphenoxy, or 4-methoxyphenoxy); a heterocyclic oxy group (a group in which an -O- group is bonded to the above-described heterocyclic group); an alkoxycarbonyl group (preferably an alkoxycarbonyl group having 2 to 20 carbon atoms, for example, ethoxycarbonyl or 2-ethylhexyloxycarbonyl); an aryloxycarbonyl group (preferably an aryloxycarbonyl group having 6 to 26 carbon atoms, for example, phenoxycarbonyl, 1-naphthyloxycarbonyl, 3-methylphenoxycarbonyl, or 4-methoxyphenoxycarbonyl); an amino group (preferably an amino group having 0 to 20 carbon atoms, an alkylamino group, or an arylamino group, for example, amino (-NH₂), N,N-dimethylamino, N,N-diethylamino, N-ethylamino, or anilino); a sulfamoyl group (preferably a sulfamoyl group having 0 to 20 carbon atoms, for example, N,N-dimethylsulfamoyl or N-phenylsufamoyl); an acyl group (an alkylcarbonyl group, an alkenylcarbonyl group, an alkynylcarbonyl group, an arylcarbonyl group, or a heterocyclic carbonyl group, preferably an acyl group having 1 to 20 carbon atoms, for example, acetyl, propionyl, butyryl, octanoyl, hexadecanoyl, acryloyl, methacryloyl, crotonoyl, benzoyl, naphthoyl, or nicotinoyl); an acyloxy group (an alkylcarbonyloxy group, an alkenylcarbonyloxy group, an alkynylcarbonyloxy group, an arylcarbonyloxy group, or a heterocyclic carbonyloxy group, preferably an acyloxy group having 1 to 20 carbon atoms, for example, acetyloxy, propionyloxy, butyryloxy, octanoyloxy, hexadecanoyloxy, acryloyloxy, methacryloyloxy, crotonoyloxy, benzoyloxy, naphthoyloxy, or nicotinoyloxy); an aryloyloxy group (preferably an aryloyloxy group having 7 to 23 carbon atoms, for example, benzoyloxy); a carbamoyl group (preferably a carbamoyl group having 1 to 20 carbon atoms, for example, N,N-dimethylcarbamoyl or N-phenylcarbamoyl); an acylamino group (preferably an acylamino group having 1 to 20 carbon atoms, for example, acetylamino or benzoylamino); an alkylthio group (preferably an alkylthio group having 1 to 20 carbon atoms, for example, methylthio, ethylthio, isopropylthio, or benzylthio); an arylthio group (preferably an arylthio group having 6 to 26 carbon atoms, for example, phenylthio, 1-naphthylthio, 3-methylphenylthio, or 4-methoxyphenylthio); a heterocyclic thio group (a group in which an -S- group is bonded to the above-described heterocyclic group); an alkylsulfonyl group (preferably an alkylsulfonyl group having 1 to 20 carbon atoms, for example, methylsulfonyl or ethylsulfonyl); an arylsulfonyl group (preferably an arylsulfonyl group having 6 to 22 carbon atoms, for example, benzenesulfonyl); an alkylsilyl group (preferably an alkylsilyl group having 1 to 20 carbon atoms, for example, monomethylsilyl, dimethylsilyl, trimethylsilyl, or triethylsilyl); an arylsilyl group (preferably an arylsilyl group having 6 to 42 carbon atoms, for example, triphenylsilyl); a phosphoryl group (preferably a phosphate group having 0 to 20 carbon atoms, for example, -OP(=O)(R^{P})₂); a phosphonyl group (preferably a phosphonyl group having 0 to 20 carbon atoms, for example, -P(=O)(R^{P})₂); a phosphinyl group (preferably a phosphinyl group having 0 to 20 carbon atoms, for example, -P(R^{P})₂); a sulfo group (sulfonate group), a carboxy group, a hydroxy group, a sulfanyl group, a cyano group, and a halogen atom (for example, a fluorine atom, a chlorine atom, a bromine atom, or an iodine atom). R^{P} is a hydrogen atom or a substituent (preferably, a group selected from the substituent T).

In addition, each group exemplified in the substituent T may further have the substituent T as a substituent.

As a method for producing the above-described polymer, the above-described polymer can be obtained by a polycondensation with a conventional method using at least one of a monomer providing the structural unit represented by Formula (I-A) or a monomer providing the structural unit represented by Formula (I-B), a monomer providing the structural unit represented by Formula (II), and other monomers as necessary.

The method for producing the above-described polymer is not particularly limited. Examples thereof include an interfacial polymerization method and a solution polymerization method, and an interfacial polymerization method is preferable. The interfacial polymerization method is a polymerization method in which a divalent carboxylic acid halide dissolved in an organic solvent which is incompatible with water is mixed with a dihydric phenol dissolved in an alkaline aqueous solution to obtain polyester. Examples of a document relating to the interfacial polymerization method include W. M. EARECKSON, J. Poly. Sci., XL399, 1959 and JP1975-1959B (JP-S40-1959B). A reaction in the interfacial polymerization method is faster than that in the solution polymerization method, so that hydrolysis of the acid halide can be suppressed, and as a result, a high-molecular-weight resin can be obtained.

More specifically, as a water phase, an alkaline aqueous solution of dihydric phenol is prepared, and then a polymerization catalyst is added thereto. On other hand, as an organic phase, a halide of divalent carboxylic acid is dissolved in a solvent which is incompatible with water and dissolves a polymer, the solution is mixed with the previous alkaline solution, and a polymerization reaction is carried out with stirring at a temperature of preferably 50°C or lower for 1 to 8 hours, thereby obtaining a desired polymer solution. Not all of the divalent carboxylic acid halide may be dissolved in the organic phase.

In the method for producing the above-described polymer, the following method A may be used. In particular, it is an effective method in a case where the divalent carboxylic acid halide is not dissolved or has low solubility in the solvent of the organic layer.

### <Method A>

As a water phase, an alkaline aqueous solution of dihydric phenol is prepared, and then a polymerization catalyst is added thereto. In this case, in the alkaline aqueous solution of dihydric phenol, the dihydric phenol or a phenoxide thereof may not be completely dissolved.

Furthermore, as an organic phase, only an organic solvent which is incompatible with water and dissolves a polymer is mixed with the above-described alkaline solution, and suspended by stirring.

A solid divalent carboxylic acid halide such as a powder is added thereto, and a polymerization reaction is carried out. This method has three advantages.

The first point is that, since the divalent carboxylic acid halide is not made into a solution or a solvent suspension in advance, hydrolysis can be suppressed until being mixed with the alkaline aqueous solution of dihydric phenol. The second point is that, since the solvent suspension is not handled, it is possible to avoid a complicated operation of transferring the solvent suspension in order to mix the solvent suspension with the alkaline aqueous solution. In order to avoid treating the divalent carboxylic acid halide as a solvent suspension, it is conceivable to dilute the divalent carboxylic acid halide with a large amount of a solvent to form a solution. On the other hand, in the method A in which the solid divalent carboxylic acid halide is added has a third advantage that, since there is no need to completely dissolve the divalent carboxylic acid halide itself, an amount of the organic solvent used can be reduced, resulting in increased production efficiency and saving of the organic solvent.

In addition, the polymerization catalyst may be added to the aqueous layer in advance, or may be added to the organic layer.

Examples of alkali used for preparing the dihydric phenol aqueous solution include sodium hydroxide, potassium hydroxide, and lithium hydroxide. An amount of the alkali used is generally 2 to 5 times the number of moles in the dihydric phenol, that is, 1 to 2.5 equivalents with respect to the hydroxyl group.

In the method for producing the polymer according to the embodiment of the present invention, the following method B may be used.

### <Method B>

As an organic layer, an organic solvent which is incompatible with water and dissolves a polymer is mixed with divalent carboxylic acid halide, and stirred to obtain a suspension. On the other hand, as a water phase, an alkaline aqueous solution of dihydric phenol is prepared in another container, and then a polymerization catalyst is added thereto. The obtained aqueous layer is added to the above-described suspension to carry out a polymerization reaction.

In a case where the divalent carboxylic acid halide is prepared as an organic solvent suspension in advance by the above-described method B, reproducibility of the polymerization step may be improved. In addition, as compared with a case of adding the solvent suspension of the divalent carboxylic acid halide to the alkaline aqueous solution of the dihydric phenol, which is a reverse procedure, since the above-described method B does not include a solution transfer step of the solvent suspension, complexity of the operation is reduced, and there is less concern about hydrolysis of the divalent carboxylic acid halide in the solution transfer step.

In the production method according to the embodiment of the present invention, the following method C may be used.

### <Method C>

As a method of a general interfacial polymerization method described above, as a water phase, an alkaline aqueous solution of dihydric phenol is prepared as described above, and then a polymerization catalyst is added thereto. On the other hand, as an organic phase, a solution or a solvent suspension of divalent carboxylic acid halide is prepared, and then added to the previous alkaline solution to carry out a polymerization reaction.

In the interfacial polymerization, from the viewpoint of controlling the molecular weight of the polymer, a terminal blocking agent may be used during the polymerization. In addition, from the viewpoint of controlling characteristics of the polymer, it is preferable that the terminal of the above-described polymer is sealed with a monohydric phenol, a monovalent acid chloride, a monohydric alcohol, a monovalent carboxylic acid, or the like. Examples of the monohydric phenol used as such a terminal blocking agent include phenol, o-cresol, m-cresol, p-cresol, p-tert-butylphenol, o-phenylphenol, m-phenylphenol, p-phenylphenol, o-methoxyphenol, m-methoxyphenol, p-methoxyphenol, 2,3,5-trimethylphenol, 2,3,6-trimethylphenol, 2,3-xylenol, 2,4-xylenol, 2,5-xylenol, 2,6-xylenol, 3,4-xylenol, 3,5-xylenol, 2-phenyl-2-(4-hydroxyphenyl)propane (also described as "p-(α-cumyl)phenol)"), 2-phenyl-2-(2-hydroxyphenyl)propane, and 2-phenyl-2-(3-hydroxyphenyl)propane. Examples of the monovalent acid chloride used as the terminal blocking agent include benzoyl chloride, methanesulfonyl chloride, phenyl chlorocarbonate, acetyl chloride, and lauroyl chloride. Examples of the monohydric alcohol used as the terminal blocking agent include methanol, ethanol, n-propanol, isopropanol, n-butanol, 2-butanol, pentanol, hexanol, dodecyl alcohol, stearyl alcohol, benzyl alcohol, and phenethyl alcohol. Examples of the monovalent carboxylic acid used as the terminal blocking agent include acetic acid, propionic acid, octanoic acid, cyclohexanecarboxylic acid, benzoic acid, toluic acid, phenylacetic acid, p-tert-butylbenzoic acid, and p-methoxyphenylacetic acid.

Among these, the terminal is blocked with preferably the monohydric phenol or the monovalent acid chloride, and more preferably p-tert-butylphenol, 2,3,5-trimethylphenol, 2,3,6-trimethylphenol, benzoyl chloride, or acetyl chloride.

Examples of the polymerization catalyst of the interfacial polymerization include quaternary ammonium salts such as tributylbenzylammonium halide, tetrabutylammonium halide, trimethylbenzylammonium halide, and triethylbenzylammonium halide; and quaternary phosphonium salts such as tributylbenzylphosphonium halide, tetrabutylphosphonium halide, trimethylbenzylphosphonium halide, and triethylbenzylphosphonium halide. Among these, from the viewpoint of easily promoting the polymerization, a salt selected from tributylbenzylammonium halide, tetrabutylammonium halide, tributylbenzylphosphonium halide, or tetrabutylphosphonium halide is preferable.

As the solvent of the organic phase in the interfacial polymerization, chlorine-based solvents such as dichloromethane, 1,2-dichloroethane, chloroform, carbon tetrachloride, chlorobenzene, 1,1,2,2-tetrachloroethane, 1,1,1-trichloroethane, o-dichlorobenzene, m-dichlorobenzene, and p-dichlorobenzene or aromatic hydrocarbons such as toluene, benzene, xylene, and anisole can be used, and tetrahydrofuran or the like can also be used. Among these, dichloromethane or o-dichlorobenzene is preferable as the organic solvent of the organic layer.

In a case where the divalent carboxylic acid halide is insoluble in the organic solvent of the organic layer, or has low solubility in the organic solvent of the organic layer, another organic solvent can also be used. The organic solvent of the organic layer is preferably a solvent which is not dissolved in water, but for the purpose of improving the solubility of the divalent carboxylic acid halide in the organic layer, or for the purpose of increasing the efficiency of the polymerization reaction, suppressing the hydrolysis of the divalent carboxylic acid halide, and obtaining a polymer with a desired molecular weight, a part or all of the organic layer can be replaced with an organic solvent which also has solubility in water.

Examples of the organic solvent which is effective to improve the solubility of the divalent carboxylic acid halide in the organic layer include tetrahydrofuran, N,N-dimethylacetamide (DMAc), N-methyl-2-pyrrolidone (NMP), dimethylsulfoxide (DMSO), 1,4-dioxane, and 1,3-dioxolane.

From the viewpoint of productivity, it is preferable that a concentration of the polymer with respect to the organic solvent in the organic layer is high. An amount of the polymer with respect to a liquid amount of the organic layer is preferably 2% by mass or more, more preferably 6% by mass or more, and still more preferably 10% by mass or more. In addition, the amount of the polymer with respect to the total amount of the aqueous layer and the organic layer is preferably 1% by mass or more, more preferably 3% by mass or more, and still more preferably 5% by mass or more.

Acetic acid is added to the polymer solution obtained after the polymerization to terminate the polymerization, and then the polymer solution is repeatedly stirred and washed with water to remove ionic components such as sodium ions, potassium ions, lithium ions, chloride ions, and polymerization catalyst, which are contained in the polymer solution. The water used for washing may be acidic or basic, and the washing is repeatedly performed until the washing waste water is neutral.

By adding dropwise the obtained polymer solution to a poor solvent, the polymer as a solid content is precipitated. A concentration of solid contents of the polymer solution is preferably 7% by mass or less. In addition, it is preferable that the volume of the poor solvent is 3 times or more the volume of the polymer solution. Examples of the poor solvent include methanol, ethanol, isopropyl alcohol, acetone, acetonitrile, and hexane.

By adding the polymer solution to the poor solvent, it is possible to reduce residual monomers, the alkali, and impurities derived from the polymerization catalyst, which are contained in the polymer. In order to reduce the content of the residual monomers and the impurities, it is particularly preferable that the immersion time in the poor solvent after the precipitation treatment in the poor solvent is 1 minute or longer. In addition, in a case where trimethylbenzylammonium halide, triethylbenzylammonium halide, or the like, which has a relatively low polymerization activity, is used as the polymerization catalyst, it is preferable that the immersion time is 3 minutes or longer. In a case where the polymer is taken out in shorter than 3 minutes, the removal of the residual monomers and the impurities from the polymer may be insufficient. In order to reduce the residual monomers and the impurities, the above-described operation of dissolving the obtained polymer in a solvent again and adding the solution to the poor solvent for precipitation may be repeated.

In a case of producing the polymer according to the embodiment of the present invention, impurities insoluble in tetrahydrofuran or dichloromethane may be generated. One of causes is considered to be that 4,4'-biphenyldicarbonyl chloride or the like is used for introducing the structural unit represented by Formula (II-1) described above. That is, it is considered that, in a case where 4,4'-biphenyldicarboxylic acid or 4-(4-carboxyphenyl)-benzoyl chloride, that is an impurity which can be contained in the 4,4'-biphenyldicarbonyl chloride, is brought into the production process of the above-described polymer, as shown in the following scheme, an acid anhydride compound is formed as the insoluble impurity.

In addition, during the polymerization reaction of the production process, 4,4'-biphenyldicarboxylic acid or 4-(4-carboxyphenyl)-benzoyl chloride may be generated, and then as shown in the following scheme, an acid anhydride compound may be formed.

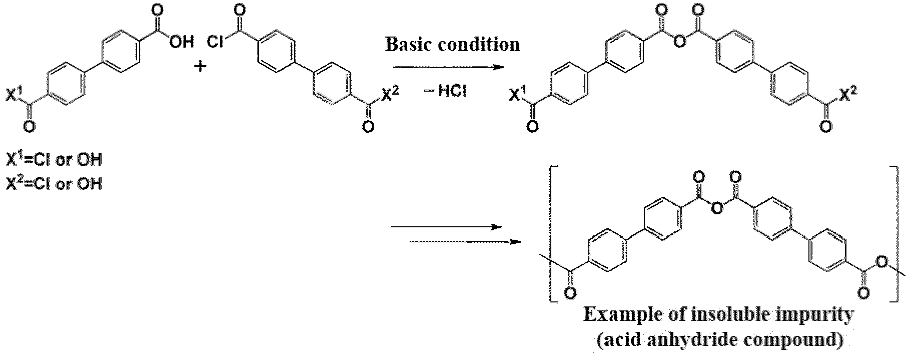

Depending on the use of the polymer or the coating film according to the embodiment of the present invention, it is preferable that the polymer or the coating film according to the embodiment of the present invention does not contain such insoluble impurities. Examples of a method of obtaining a polymer containing no insoluble impurities include a method in which a solution containing the polymer and the insoluble impurities is treated with various adsorbents to remove the insoluble impurities.

In addition, for the purpose of suppressing the generation of insoluble impurities, it is preferable to use 4,4'-biphenyldicarbonyl chloride containing less 4,4'-biphenyldicarboxylic acid or 4-(4-carboxyphenyl)-benzoyl chloride as an impurity. Each content of 4,4'-biphenyldicarboxylic acid and 4-(4-carboxyphenyl)-benzoyl chloride in the 4,4'-biphenyldicarbonyl chloride is preferably 5% by mass or less, more preferably 1% by mass or less, and still more preferably 0.5% by mass or less.

The resin composition for coating according to the embodiment of the present invention usually contains a solvent, in addition to the above-described polymer. The polymer obtained as described above has high solubility in a general-purpose solvent or a mixed solvent thereof. That is, examples of a solvent used alone or solvents used in combination include chlorine-based solvents such as dichloromethane, 1,2-dichloroethane, chloroform, carbon tetrachloride, chlorobenzene, 1,1,2,2-tetrachloroethane, 1,1,1-trichloroethane, and o- or m-dichlorobenzene; aromatic hydrocarbons such as toluene, benzene, and xylene; N-methyl-2-pyrrolidone (NMP), N,N-dimethylacetamide (DMAc), 1,4-dioxane, and tetrahydrofuran. The solvent can be used alone, or used as a mixed solvent thereof.

It order to impart desired functionality to the obtained coating film according to the embodiment of the present invention, it is also preferable that the resin composition for coating according to the embodiment of the present invention contains a functional material. The function imparted to the coating film according to the embodiment of the present invention is not limited to a specific function. For example, in the resin composition for coating or the coating film according to the embodiment of the present invention, a mass ratio of respective contents of the polymer and the functional material can be 90:10 to 50:50, preferably 80:20 to 50:50.

The above-described functional material is not particularly limited, and from the viewpoint of further enhancing compatibility or interaction with the above-described polymer, an aromatic ring-containing compound containing a benzene ring is preferable. The aromatic ring-containing compound containing a benzene ring preferably has 2 to 15 benzene rings, more preferably has 3 to 12 benzene rings, and still more preferably has 4 to 10 benzene rings. In addition, a molecular weight of the aromatic ring-containing compound containing a benzene ring is preferably 200 to 2,000, more preferably 250 to 1,500, and still more preferably 300 to 1,000.

The above-described aromatic ring-containing compound containing a benzene ring is preferably a compound represented by Formula (V).

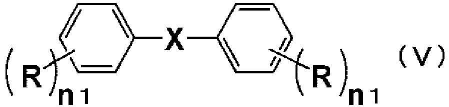

In the formula, X represents an oxygen atom, a sulfur atom, a hydrocarbon group which may have a substituent, or an imino group which may have a substituent. n1 represents an integer of 0 to 4. R represents a monovalent organic group or a hydroxyl group.

As the hydrocarbon group which may have a substituent, which can be adopted as X, a hydrocarbon group containing an aromatic ring, having 6 to 35 carbon atoms, is preferable, and a hydrocarbon group containing an aromatic ring, having 6 to 25 carbon atoms, is more preferable. n1 is preferably an integer of 0 to 2, and more preferably 0 or 1. The monovalent organic group which can be adopted as R is preferably a linear alkyl group.

Since the aromatic compound represented by Formula (V) contains a plurality of benzene rings, and contains a heteroatom such as an oxygen atom, a sulfur atom, and a nitrogen atom, and the aromatic compound represented by Formula (V) is rigid due to the large mass ratio of the benzene rings in the aromatic compound, the compatibility or interaction between the above-described polymer and the functional material is enhanced, and mechanical properties of the obtained coating film can be further improved. In addition, an effect of causing densification of the coating film and suppressing moisture permeability of the coating film is also expected.

A molecular weight of the aromatic compound represented by Formula (V) is preferably 200 to 2,000, more preferably 250 to 1,500, and still more preferably 300 to 1,000.

The number of benzene rings in Formula (V) is preferably 2 to 15, more preferably 3 to 12, and still more preferably 4 to 10.

The aromatic compound represented by Formula (V) preferably has at least one of an oxygen atom or a nitrogen atom.

### [Method for producing polymer]

Preferred embodiments of the method for producing a polymer according to the present invention will be described.

In the interfacial polymerization of divalent carboxylic acid halide and dihydric phenol, in general, from the viewpoint of preventing hydrolysis of the divalent carboxylic acid halide or from the viewpoint of reproducibility of the polymerization reaction, it has been considered that, as described above, it is preferable that the divalent carboxylic acid halide is added to the alkaline aqueous solution of dihydric phenol as a solution or a slurry mixed with an organic solvent. On the other hand, as a result of intensive studies, the present inventors have found that, even in a case where a solid of 4,4'-biphenyldicarbonyl chloride such as a powder is directly added to a mixture containing the alkaline aqueous solution of dihydric phenol, the polymerization catalyst, and the organic solvent of the organic layer, a polymer with a desired molecular weight can be obtained efficiently.

The method for producing a polymer according to the embodiment of the present invention is suitable as a method for producing a polymer which includes at least at least one of a structural unit represented by Formula (I-A) or a structural unit represented by Formula (I-B), and includes a structural unit represented by Formula (II-2) (hereinafter, also referred to as "production method according to the embodiment of the present invention"), and the method includes a step of mixing a mixture containing an alkaline aqueous solution of dihydric phenol and an organic solvent with a solid 4,4'-biphenyldicarbonyl chloride. The production method according to the embodiment of the present invention more preferably includes a step adding the solid 4,4'-biphenyldicarbonyl chloride to the mixture containing the alkaline aqueous solution of dihydric phenol and the organic solvent, while stirring the mixture. In the present invention, the "solid 4,4'-biphenyldicarbonyl chloride" means a solid 4,4'-biphenyldicarbonyl chloride itself, not in a state mixed with an organic solvent (not in a solution state or slurry state).

The above-described polymer includes at least one of a structural unit represented by Formula (I-A) or a structural unit represented by Formula (I-B) and a structural unit represented by Formula (II-2), the total of respective contents of the structural unit represented by Formula (I-A) and the structural unit represented by Formula (I-B) is 10% by mass or more, and a content of the structural unit represented by Formula (II-2) is 10% by mass or more.

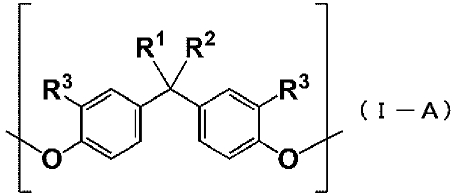

In the formula, R¹ represents an unsubstituted chain-like branched alkyl group having 4 or more carbon atoms,
R² represents a hydrogen atom, a linear alkyl group, or an aryl group,
R³ represents a hydrogen atom, an alkyl group, or an aryl group,
R¹ and R² are not bonded to each other to form a ring structure,
a total number of carbon atoms in R¹ and two R³'s is 6 or more, and
a substituent other than R³ is not present on two benzene rings shown in the formula.

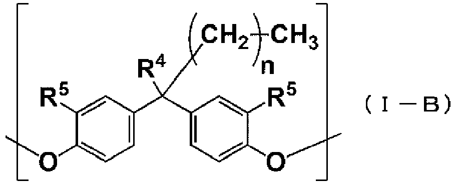

In the formula, R⁴ represents a hydrogen atom, a linear alkyl group, or an aryl group,
n is an integer of 2 to 20,
R⁵ represents a hydrogen atom, an alkyl group, or an aryl group, and
a substituent other than R⁵ is not present on two benzene rings shown in the formula.

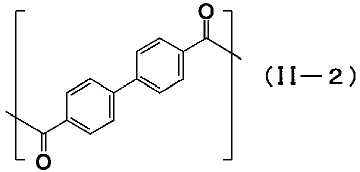

The production method according to the embodiment of the present invention is performed, for example, by the above-described method A. Advantages of the method A are as described above.

In the production method according to the embodiment of the present invention (method A), from the viewpoint of enhancing properties of the obtained polymer, it is preferable to use, as the dihydric phenol component, at least one compound represented by the following formula, which provides the structural unit represented by Formula (I-A) or (I-B) described above.

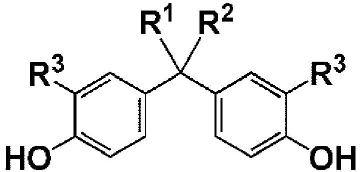

In the formula, R¹ represents an unsubstituted chain-like branched alkyl group having 4 or more carbon atoms,
R² represents a hydrogen atom, a linear alkyl group, or an aryl group,
R³ represents a hydrogen atom, an alkyl group, or an aryl group,
R¹ and R² are not bonded to each other to form a ring structure,
a total number of carbon atoms in R¹ and two R³'s is 6 or more, and
a substituent other than R³ is not present on two benzene rings shown in the formula.

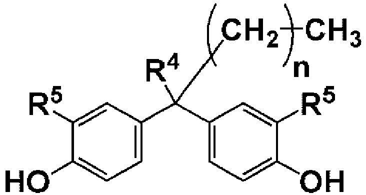

In the formula, R⁴ represents a hydrogen atom, a linear alkyl group, or an aryl group,
n is an integer of 2 to 20,
R⁵ represents a hydrogen atom, an alkyl group, or an aryl group, and
a substituent other than R⁵ is not present on two benzene rings shown in the formula.

From the viewpoint of workability during production, it is preferable that the solid 4,4'-biphenyldicarbonyl chloride does not contain an organic solvent. In a case where 4,4'-biphenyldicarbonyl chloride contains an organic solvent, a content of the organic solvent with respect to the total amount of the solid 4,4'-biphenyldicarbonyl chloride and the organic solvent is preferably 20% by mass or less, more preferably 10% by mass or less, and still more preferably 5% by mass or less.

In the interfacial polymerization of the production method according to the embodiment of the present invention, from the viewpoint of enhancing properties of the obtained polymer and controlling the molecular weight during polymerization, it is preferable to use a compound represented by the following formula together with the dihydric phenol.

H-O-R^{a}

In the formula, R^{a} is the same monovalent organic group as R^{a} in Formula (IV-1) described above, and the same applies to the preferred aspect thereof.

Examples of the above-described compound represented by H-O-R^{a} include the monohydric phenol or the monohydric alcohol, which is used in the method for producing the above-described polymer.

In the entire terminal structure of the polymer obtained by the production method according to the embodiment of the present invention, it is preferable that a proportion of the total terminal structure derived from the above-described compound represented by H-O-R^{a} is the same as a proportion of the total terminal structure derived from the compound represented by Formula (IV-1) described above in the entire terminal structure of the above-described polymer.

Furthermore, it is also preferable to use a compound represented by the following formula together with 4,4'-biphenyldicarbonyl chloride.

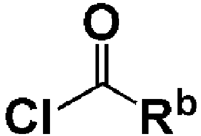

In the formula, R^{b} is the same monovalent organic group as R^{b} in Formula (IV-2) described above, and the same applies to the preferred aspect thereof.

Examples of the above-described compound represented by the formula include the monovalent acid chloride which is used in the method for producing the above-described polymer.

In the production method according to the embodiment of the present invention, the monovalent carboxylic acid used in the method for producing the above-described polymer may be used together with the 4,4'-biphenyldicarbonyl chloride.

In the entire terminal structure of the polymer obtained by the production method according to the embodiment of the present invention, it is preferable that a proportion of the total terminal structure derived from the above-described compound is the same as a proportion of the total terminal structure derived from the compound represented by Formula (IV-2) described above in the entire terminal structure of the above-described polymer.

In the production method according to the embodiment of the present invention, a monomer providing at least one of the structural units of Formula (I-C), (II), or (II-1) described above or the structural unit described from the dicarboxylic acid unit described above, which is used in the method for producing the above-described polymer, may be used. It is preferable that contents of the structural unit of Formula (I-A), (I-B), (II), (II-1), or (I-C), and the structural unit derived from the dicarboxylic acid described above in the polymer obtained by the production method according to the embodiment of the present invention are the same as the contents of these structural units in the above-described polymer. In addition, it is also preferable that a weight-average molecular weight of the polymer obtained by the production method according to the embodiment of the present invention is the same as the weight-average molecular weight of the above-described polymer.

Furthermore, the polymerization catalyst and the organic solvent used in the production method according to the embodiment of the present invention are the same as the polymerization catalyst and the organic solvent used in the method for producing the above-described polymer, and preferred polymerization catalysts and organic solvents are also the same.

The reason why a desired polymer solution is obtained despite of the low solubility of 4,4'-biphenyldicarbonyl chloride in a solvent is considered to be that, among the added solid 4,4'-biphenyldicarbonyl chloride, components dissolved in the organic layer are gradually consumed, and eventually a part or all of the 4,4'-biphenyldicarbonyl chloride dissolves for the polymerization reaction. In addition, the reason why the desired polymer is obtained almost unaffected by hydrolysis despite of the addition of the solid 4,4'-biphenyldicarbonyl chloride is considered to be that, since the reaction between the phenoxide of the dihydric phenol and the 4,4'-biphenyldicarbonyl chloride is very fast, even in a case where a solid surface of the 4,4'-biphenyldicarbonyl chloride is in direct contact with the alkaline aqueous solution, the desired polymerization reaction is dominant. From the viewpoint of further suppressing the hydrolysis of the 4,4'-biphenyldicarbonyl chloride, it is preferable to suppress the amount of alkali used in the preparation of the alkaline aqueous solution of dihydric phenol.

In the production method according to the embodiment of the present invention, post treatment in the method for producing the above-described polymer may be carried out.

### [Coating film]

The coating film according to the embodiment of the present invention may be composed of the polymer according to the embodiment of the present invention, or may contain other components in addition to the polymer according to the embodiment of the present invention. Examples of the other components include the above-described functional material. The coating film according to the embodiment of the present invention has excellent film-forming properties in forming the coating film, and the coating film itself is excellent in heat resistance and abrasion resistance.

Examples of a coating film combined with the functional material include a low moisture permeability film as described in JP2016-69468A. That is, by adding the phenolic compound as the functional material to the polymer, the polymer has high compatibility with the functional material, and the moisture permeability can be effectively suppressed.

In addition, other examples of the coating film combined with the functional material include a charge transport layer of an electrophotographic photoreceptor. That is, the above-described charge transport layer contains the above-described polymer as a binder and a charge transport material, and the binder is required to have high compatibility with the charge transport material. In a case where the coating film according to the embodiment of the present invention is used as a charge transport layer containing the above-described polymer and an aromatic compound as a charge transport material, a charge transport layer having excellent abrasion resistance can be obtained.

The coating film according to the embodiment of the present invention can be preferably applied as, for example, a metal wire coating film, a polarizing plate protective film for a display device, or the like.

The coating film according to the embodiment of the present invention can also be used in a state in which another layer is disposed thereon. For example, by forming a protective layer in contact with the coating film according to the embodiment of the present invention, durability can be further enhanced.

A method for forming the coating film according to the embodiment of the present invention is not particularly limited as long as a film containing the above-described polymer can be formed. For example, the coating film can be formed, for example, by applying the resin composition for coating according to the embodiment of the present invention onto a substrate, and drying the coating film. As the coating method and the drying method itself, a method which can be generally used in the application and drying of a coating liquid can be appropriately adopted. The substrate is not particularly limited, and a material, a member, or the like, which has a surface to be coated, can be widely adopted.

### Examples

Hereinafter, the present invention will be described in more detail based on Examples, but the present invention is not limited thereto. In structural formulae shown below, Me represents a methyl group.

### [Preparation of polymer constituting composition for coating film]

### <Example 1>

### -Preparation of polymer (1)-

A polymer (1) was prepared according to the following scheme.

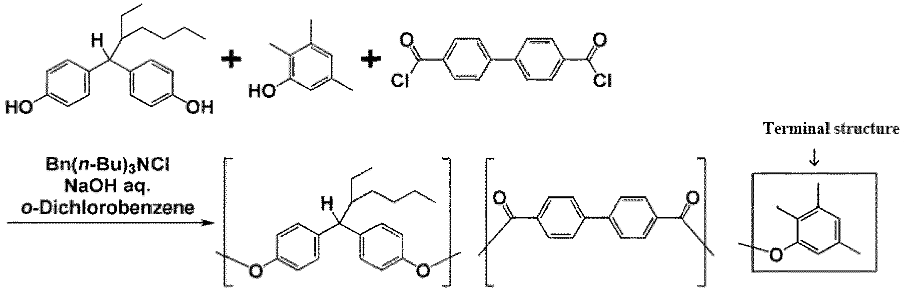

12.6373 g of 4,4'-(2-ethylhexylidene)diphenol (manufactured by Honshu Chemical Industry Co., Ltd.), 0.1118 g of 2,3,5-trimethylphenol (manufactured by Tokyo Chemical Industry Co., Ltd.), 0.0632 g of sodium hydrosulfite (manufactured by FUJIFILM Wako Pure Chemical Corporation), and 240 mL of water were charged into a reaction container equipped with a stirrer to form a suspension. 4.8392 g of sodium hydroxide (manufactured by FUJIFILM Wako Pure Chemical Corporation), 0.1981 g of benzyltributylammonium chloride (manufactured by FUJIFILM Wako Pure Chemical Corporation), and 160 mL of water were added to the suspension with stirring at a temperature of room temperature (20°C), and the mixture was stirred for 30 minutes under a nitrogen atmosphere to obtain a solution in which the solid content was mostly dissolved (there was some turbidity). 220 mL of o-dichlorobenzene (manufactured by FUJIFILM Wako Pure Chemical Corporation) was added to the aqueous solution, the mixture was stirred for 30 minutes under a nitrogen atmosphere, and then 12.0000 g of 4,4'-biphenyldicarbonyl chloride (manufactured by Tokyo Chemical Industry Co., Ltd.) as powder was added thereto. After completion of the addition, the temperature was set to room temperature (20°C), and the mixture was stirred for 4 hours under a nitrogen atmosphere to proceed a reaction. The solution after the polymerization was diluted with 300 mL of o-dichlorobenzene, and the aqueous layer was removed. After washing with a dilute acetic acid solution and ion exchange water, the resultant was poured into methanol (manufactured by FUJIFILM Wako Pure Chemical Corporation) to precipitate a polymer. The precipitated polymer was filtered, and dried at 50°C. The polymer was re-dissolved in 900 mL of tetrahydrofuran (manufactured by FUJIFILM Wako Pure Chemical Corporation), and poured into methanol to precipitate the polymer. The precipitated polymer was filtered, washed with methanol, and dried at 50°C to obtain 17.5 g of a white polymer (1). A weight-average molecular weight (Mw) of the polymer, which was determined as a polystyrene-equivalent molecular weight by gel permeation chromatography (GPC; using tetrahydrofuran as an eluent), was 130,000.

The above-described method is a case where 4,4'-biphenyldicarbonyl chloride is added as a powder, and corresponds to the method A.

### <Example 2>

### -Preparation of polymer (2)-

According to the following scheme, a white polymer (2) composed of structural units shown in Table 1 was prepared according to Example 1.

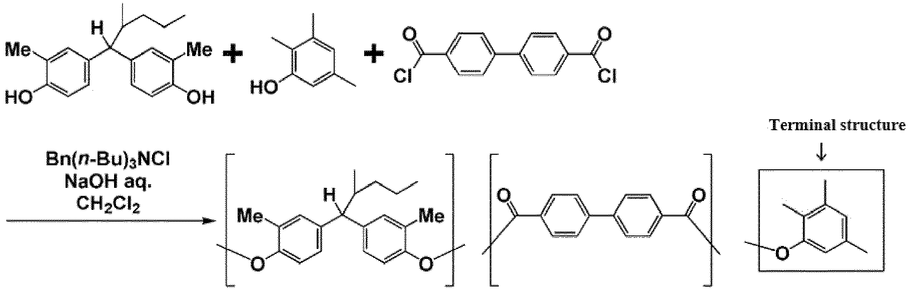

### <Example 3>

### -Preparation of polymer (3)-

According to the following scheme, a white polymer (3) composed of structural units shown in Table 1 was prepared according to Example 1.

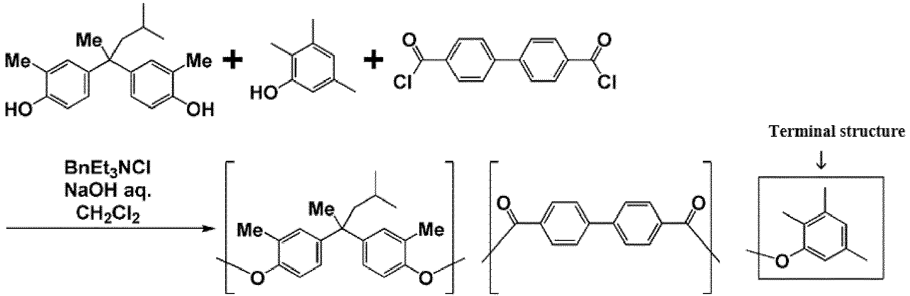

### <Example 4>

### -Preparation of polymer (4)-

According to the following scheme, a white polymer (4) composed of structural units shown in Table 1 was prepared.

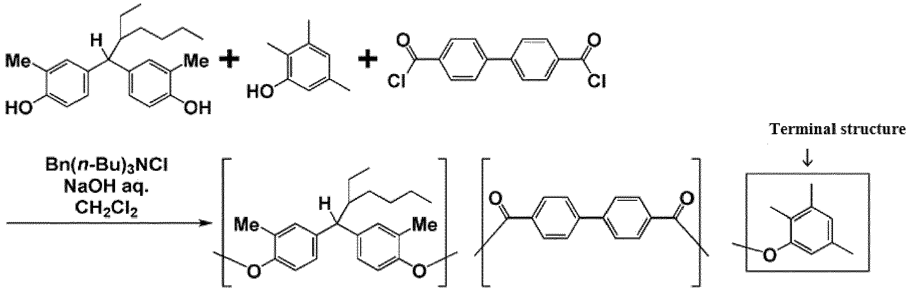

### <Example 5>

### -Preparation of polymer (5)-

According to the following scheme, a white polymer (5) composed of structural units shown in Table 1 was prepared according to Example 1.

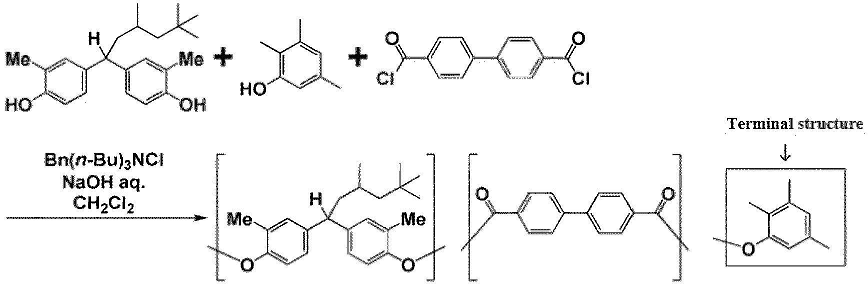

### <Example 6>

### -Preparation of polymer (6)-

According to the following scheme, a white polymer (6) composed of structural units shown in Table 1 was prepared according to Example 1.

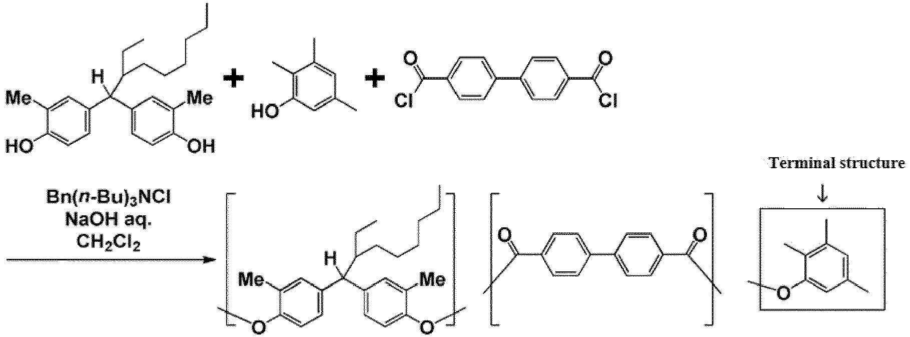

### <Example 7>

### -Preparation of polymer (7)-

According to the following scheme, a white polymer (9) composed of structural units shown in Table 2 was prepared according to Example 1.

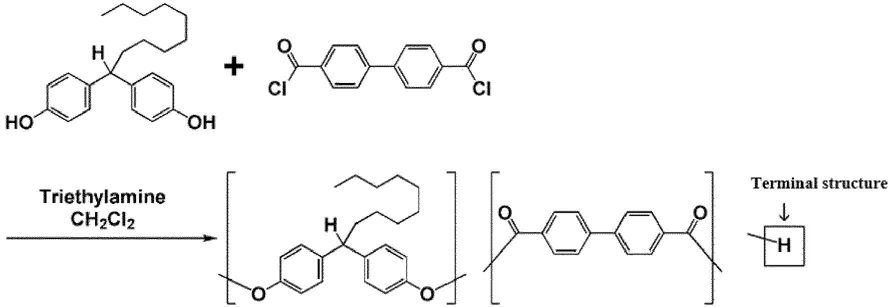

In a reaction container equipped with a stirrer, 550 mL of methylene chloride (manufactured by FUJIFILM Wako Pure Chemical Corporation) was added to 46.9040 g of 4,4'-decylidene bisphenol (manufactured by Honshu Chemical Industry Co., Ltd.) and 29.8020 g of triethylamine (manufactured by FUJIFILM Wako Pure Chemical Corporation) to form a solution. 40.0000 g of 4,4'-biphenyldicarbonyl chloride (manufactured by Tokyo Chemical Industry Co., Ltd.) as powder was added to the solution with stirring at a temperature of 5°C. After completion of the addition, the temperature was raised to 30°C, and the mixture was stirred for 4 hours under a nitrogen atmosphere to proceed a reaction. The solution after the polymerization was diluted with 2800 mL of tetrahydrofuran, and poured into methanol to precipitate a polymer. The precipitated polymer was filtered, washed with methanol, and dried at 50°C. The polymer was re-dissolved in 3000 ml of tetrahydrofuran, and poured into methanol to precipitate the polymer. The precipitated polymer was filtered, washed with methanol, and dried at 50°C to obtain 64.7 g of a white polymer (7).

The above-described method is not an interfacial polymerization method but a solution polymerization method. Therefore, the above-described method does not correspond to any of the method A, the method B, or the method C.

### <Example 8>

### -Preparation of polymer (8)-

According to the following scheme, a white polymer (10) composed of structural units shown in Table 2 was prepared according to Example 1.

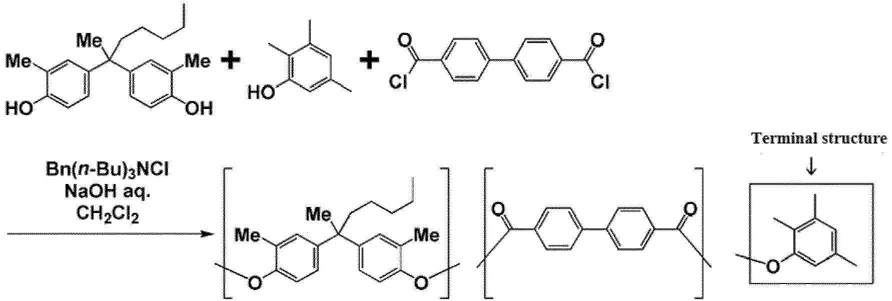

### <Example 9>

### -Preparation of polymer (9)-

According to the following scheme, a white polymer (11) composed of structural units shown in Table 2 was prepared according to Example 1.

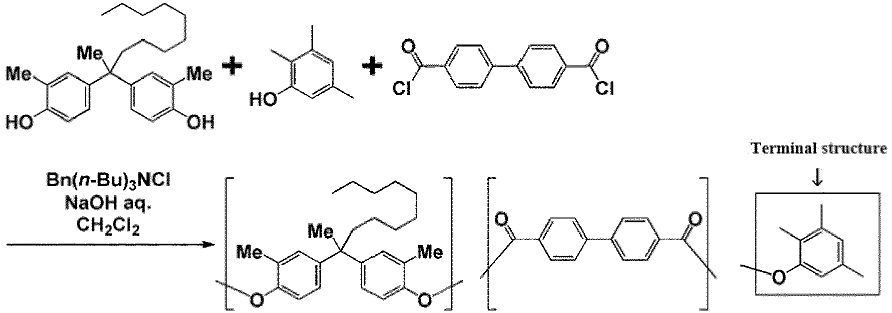

### <Comparative Example 1>

### -Preparation of comparative polymer (1)-

According to the following scheme, a white comparative polymer (1) composed of structural units shown in Table 3 was prepared as a polymer corresponding to Resin-2 of JP6500996B. Since synthesis conditions of Resin-2 were not described, the synthesis conditions were based on Example 1. However, the obtained polymer did not have solubility in tetrahydrofuran, and thus it was not possible to form a film for producing an evaluation sample in the first place. Table 3 shows a weight-average molecular weight of the comparative polymer (1), which was determined in the same manner as in Example 1, and calculated contents of the structural units.

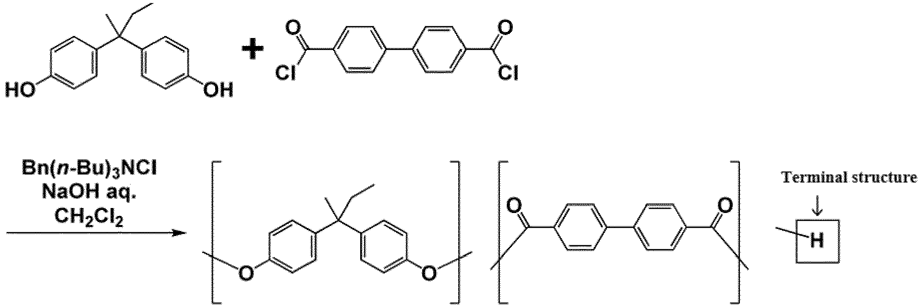

### <Comparative Example 2>

### -Preparation of comparative polymer (2)-

According to the following scheme, a white comparative polymer (2) composed of structural units shown in Table 3 was prepared according to Synthesis Example 17 of JP2017-215584A. In Synthesis Example 17 described in Table 1 of JP2017-215584A, a structure represented by General Formula (I) is I-1/I-24 (90/10), but since a specific structure of I-24 was not described, the polymer was prepared as I-1/I-4 (90/10). Table 3 shows a weight-average molecular weight of the comparative polymer (2), which was determined in the same manner as in Example 1, and calculated contents of the structural units.

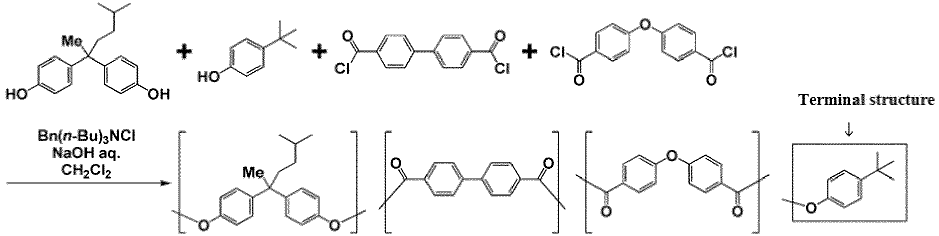

### <Comparative Example 3>

### -Preparation of comparative polymer (3)-

According to the following scheme, a white comparative polymer (3) composed of structural units shown in Table 3 was prepared according to Example 3 of JP4927690B. Table 3 shows a weight-average molecular weight of the comparative polymer (3), which was determined in the same manner as in Example 1, and calculated contents of the structural units.

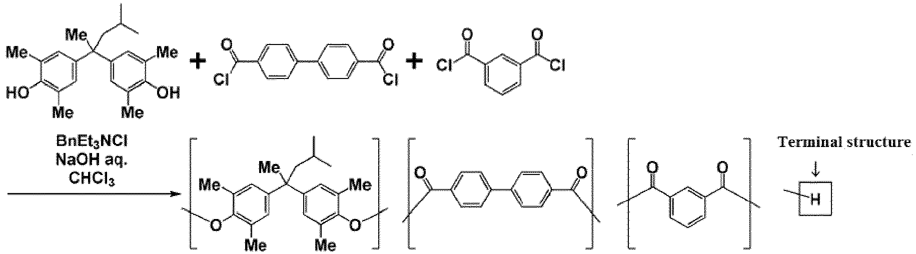

### <Comparative Example 4>

### -Preparation of comparative polymer (4)-

According to the following scheme, a white comparative polymer (4) composed of structural units shown in Table 3 was prepared according to Example 4 of JP4927690B. Table 3 shows a weight-average molecular weight of the comparative polymer (4), which was determined in the same manner as in Example 1, and calculated contents of the structural units.

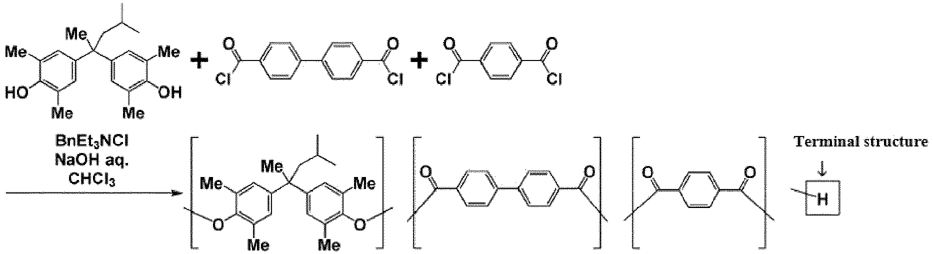

### <Comparative Example 5>

### -Preparation of comparative polymer (5)-

According to the following scheme, a white comparative polymer (4) composed of structural units shown in Table 4 was prepared according to Example 5 of JP4927690B. Table 4 shows a weight-average molecular weight of the comparative polymer (5), which was determined in the same manner as in Example 1, and calculated contents of the structural units.

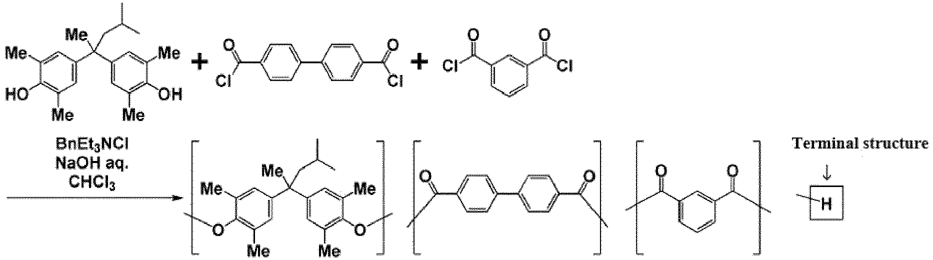

### <Comparative Example 6>

### -Preparation of comparative polymer (6)-

According to the following scheme, a white comparative polymer (6) composed of structural units shown in Table 4 was prepared according to Example 6 of JP4927690B. Table 4 shows a weight-average molecular weight of the comparative polymer (6), which was determined in the same manner as in Example 1, and calculated contents of the structural units.

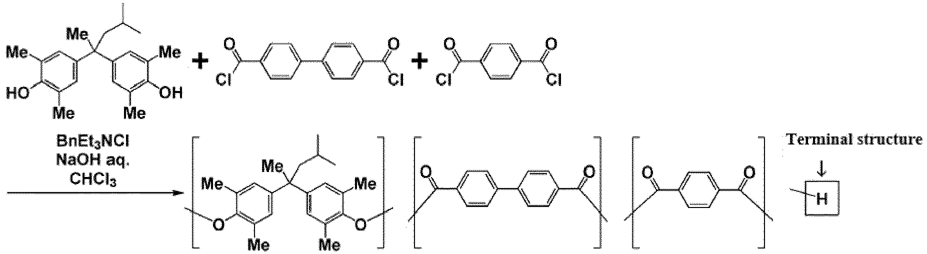

### <Comparative Example 7>

### -Preparation of comparative polymer (7)-

According to the following scheme, a white comparative polymer (7) composed of structural units shown in Table 4 was prepared according to Example 1 of JP5117006B. Table 4 shows a weight-average molecular weight of the comparative polymer (7), which was determined in the same manner as in Example 1, and calculated contents of the structural units.

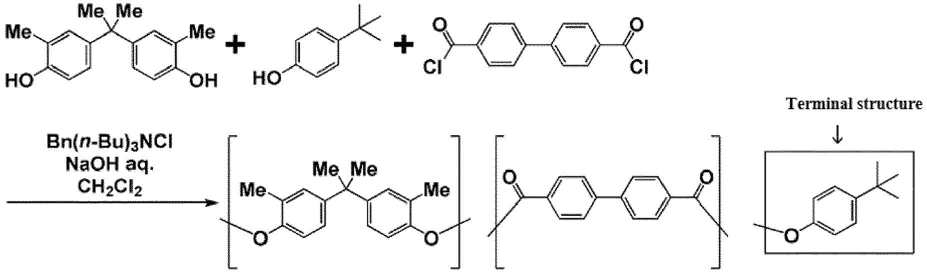

### <Comparative Example 8>

### -Preparation of comparative polymer (8)-

According to the following scheme, a white comparative polymer (8) composed of structural units shown in Table 5 was prepared according to Production Example 14 of JP5481829B. Table 5 shows a weight-average molecular weight of the comparative polymer (8), which was determined in the same manner as in Example 1, and calculated contents of the structural units.

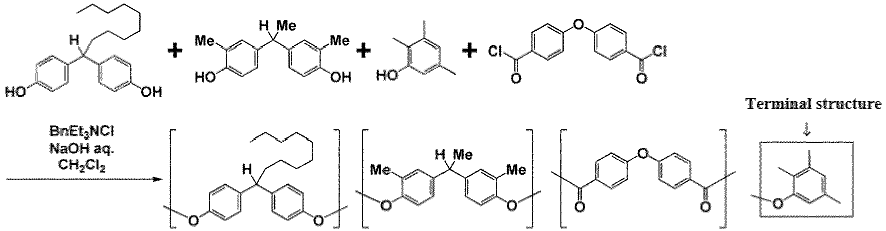

### <Comparative Example 9>

### -Preparation of comparative polymer (9)-

According to the following scheme, a white comparative polymer (9) composed of structural units shown in Table 5 was prepared according to Production Example 3 of JP4246621B. Table 5 shows a weight-average molecular weight of the comparative polymer (9), which was determined in the same manner as in Example 1, and calculated contents of the structural units.

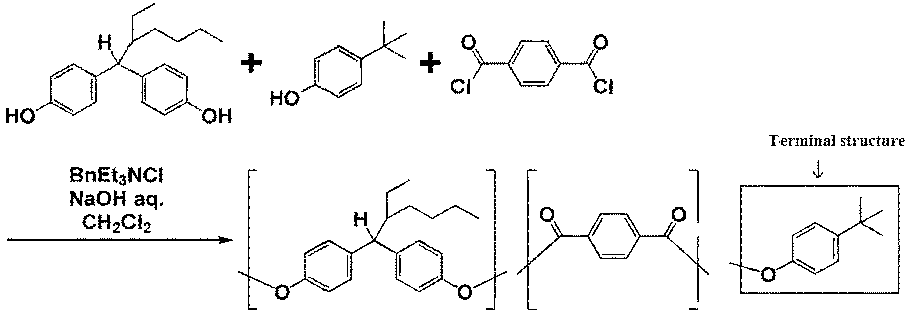

### <Comparative Example 10>

### -Preparation of comparative polymer (10)-

According to the following scheme, a white comparative polymer (10) composed of structural units shown in Table 5 was prepared according to Comparative Production Example 1 of JP4246621B. Table 5 shows a weight-average molecular weight of the comparative polymer (10), which was determined in the same manner as in Example 1, and calculated contents of the structural units.

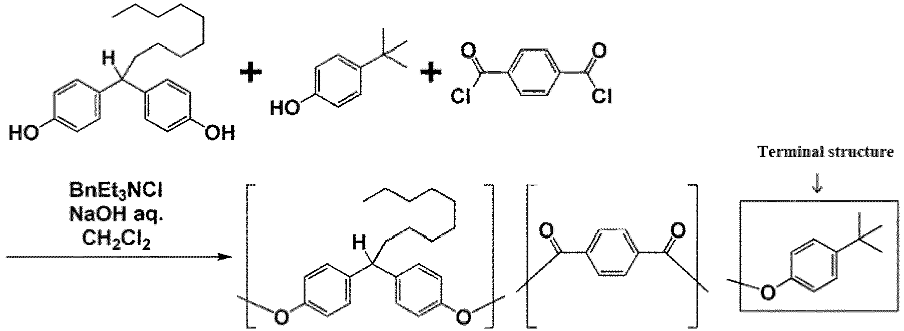

### <Comparative Example 11>

### -Preparation of comparative polymer (11)-

According to the following scheme, a white comparative polymer (11) composed of structural units shown in Table 5 was prepared as a structure of I-15 of JP2005-156605A. Since synthesis conditions of I-15 were not described, the synthesis conditions were based on Example 1. Table 5 shows a weight-average molecular weight of the comparative polymer (11), which was determined in the same manner as in Example 1, and calculated contents of the structural units. The proportion (molar ratio) of the structural unit derived from terephthalic acid chloride and the structural unit derived from isophthalic acid chloride in the comparative polymer (11) was 1:1.

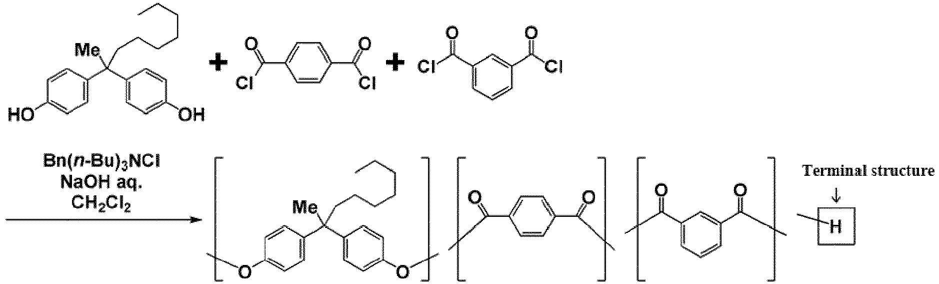

### <Comparative Example 12>

### -Preparation of comparative polymer (12)-

According to the following scheme, a white comparative polymer (12) composed of structural units shown in Table 5 was prepared as a structure of I-14 of JP2005-156605A. Since synthesis conditions of I-14 were not described, the synthesis conditions were based on Example 1. Table 5 shows a weight-average molecular weight of the comparative polymer (12), which was determined in the same manner as in Example 1, and calculated contents of the structural units. The proportion (molar ratio) of the structural unit derived from terephthalic acid chloride and the structural unit derived from isophthalic acid chloride in the comparative polymer (12) was 1:1.

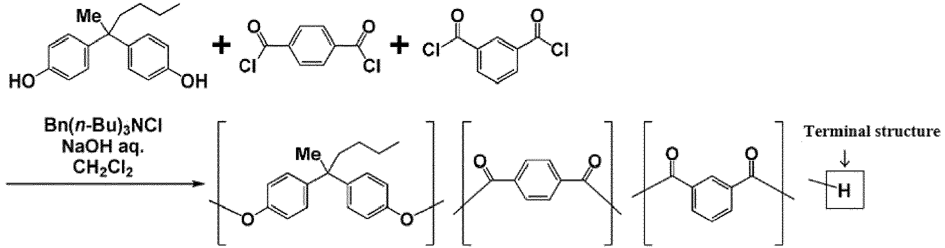

### <Comparative Example 13>

### -Preparation of comparative polymer (13)-

According to the following scheme, a white comparative polymer (13) composed of structural units shown in Table 6 was prepared according to Synthesis Example 12 of JP2017-151425A. Table 6 shows a weight-average molecular weight of the comparative polymer (13), which was determined in the same manner as in Example 1, and calculated contents of the structural units.

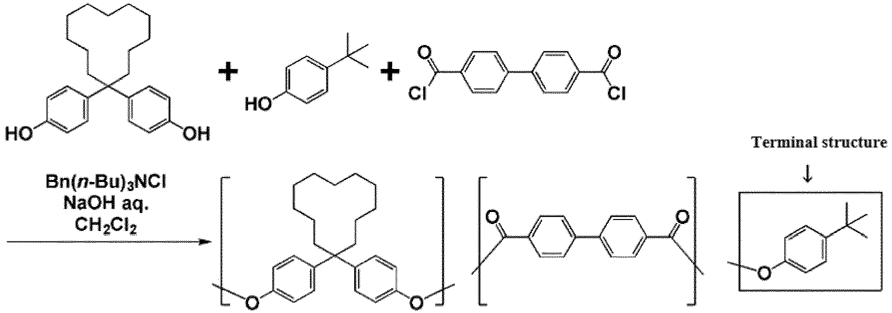

### <Comparative Example 14>

### -Preparation of comparative polymer (14)-

According to the following scheme, a white comparative polymer (15) composed of structural units shown in Table 6 was prepared according to Example 5 of JP6455025B. Table 6 shows a weight-average molecular weight of the comparative polymer (14), which was determined in the same manner as in Example 1, and calculated contents of the structural units. The proportion (molar ratio) of the structural unit derived from terephthalic acid chloride and the structural unit derived from isophthalic acid chloride in the comparative polymer (14) was 1:1.

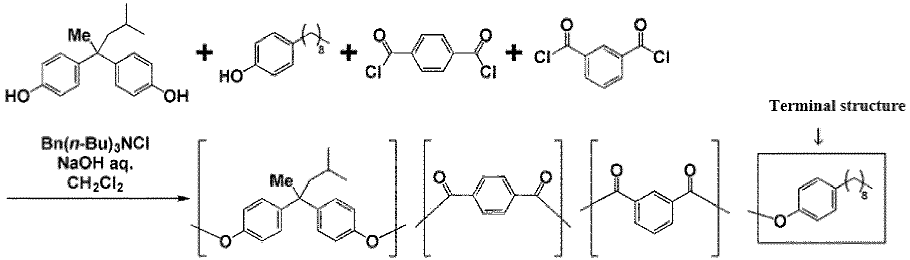

### <Comparative Example 15>

### -Preparation of comparative polymer (15)-

According to the following scheme, a white comparative polymer (15) composed of structural units shown in Table 6 was prepared according to Example 5 of JP6815025B. Table 6 shows a weight-average molecular weight of the comparative polymer (15), which was determined in the same manner as in Example 1, and calculated contents of the structural units. The proportion (molar ratio) of the structural unit derived from terephthalic acid chloride and the structural unit derived from isophthalic acid chloride in the comparative polymer (15) was 1:1.

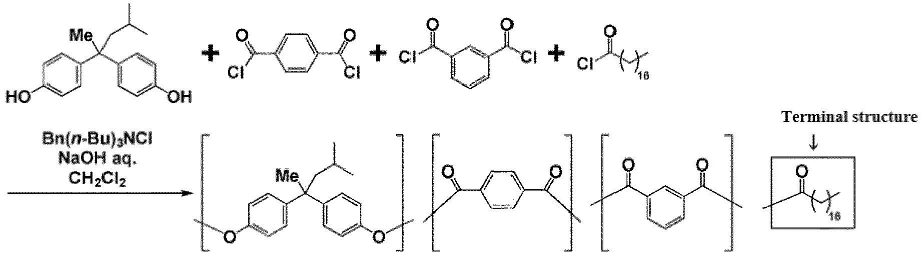

### [Production (1) of evaluation sample]

1.2 g of each of the polymers (1) to (9) and the comparative polymers (1) to (15) prepared above was mixed with 18 g of tetrahydrofuran (manufactured by FUJIFILM Wako Pure Chemical Corporation) as a solvent to prepare each coating liquid corresponding to each polymer. Each coating liquid was added dropwise to a petri dish, and dried to obtain, as a coating film, a cast film having a film thickness of 10 to 50 µm, corresponding to each polymer. The cast film was peeled off from the petri dish, and used as an evaluation sample.

### <Abrasion resistance test (1)>

Each cast film produced in the production (1) of evaluation sample was attached to S-36 (manufactured by Taber Co., Ltd.) to produce an evaluation sample for an abrasion resistance test.

Each evaluation sample produced above was set in a rotary abrasion tester (manufactured by Toyo Seiki Seisaku-sho, Ltd.), and using a abrasion wheel CS-10 (manufactured by Taber Co., Ltd.), the evaluation sample was rotated 2000 times under conditions of a load of 500 gf and a rotation speed of 60 rpm to carry out an abrasion evaluation test. An abrasion reduction amount (mg/2000 rotations), which was a change in mass of the sample before and after the abrasion evaluation test, was measured. Based on the obtained abrasion reduction amount, abrasion resistance of each photoconductor was evaluated according to the following standard. The results are shown in Tables 1 to 6. The evaluation samples formed from the polymers (1) to (9) were each used as evaluation samples for the abrasion resistance test (1) of Examples 1 to 9, and the evaluation samples formed from the comparative polymers (2) to (15) were each used as evaluation samples for the abrasion resistance test (1) of Comparative Examples 2 to 15.

### -Evaluation standard of abrasion resistance-

A: abrasion reduction amount was less than 7 mg.
B: abrasion reduction amount was 7 mg or more and less than 8 mg.
C: abrasion reduction amount was 8 mg or more and less than 10 mg.
D: abrasion reduction amount was 10 mg or more and less than 13 mg.
E: abrasion reduction amount was 13 mg or more.

### [Production (2) of evaluation sample]

800 mg of each of the polymers (1) to (9) and the comparative polymers (2) to (15) prepared above and 400 mg of 4,4'-(α-methylbenzylidene)bisphenol (manufactured by Tokyo Chemical Industry Co., Ltd.) as an aromatic ring-containing compound (functional material) were mixed with 18 g of tetrahydrofuran (manufactured by FUJIFILM Wako Pure Chemical Corporation) as a solvent to prepare each coating liquid corresponding to each polymer. Each coating liquid was added dropwise to a petri dish to obtain, as a coating film, a cast film having a film thickness of 10 to 50 µm, corresponding to each polymer. The cast film was peeled off from the petri dish, and used as an evaluation sample.

### <Evaluation of film-forming properties (compatibility)>

For each polymer, a cast film containing no functional material, which was produced in the production (1) of evaluation sample, and a cast film containing the functional material, which was produced in the production (2) of evaluation sample, were obtained. Thereafter, cloudiness of the cast films was visually observed (for example, in a case of using the polymer (1), a cast film containing the polymer (1) and not containing the functional material and a cast film containing the polymer (1) and the functional material were visually observed for cloudiness or wrinkles of the film). As a result, film-forming properties based on compatibility between each polymer and the functional material were evaluated. The results are shown in Tables 1 to 6.

### -Evaluation standard of film-forming properties-

OK: the cast film containing the functional material exhibited the same level of transparency as the cast film containing no functional material.

NG: the cast film containing the functional material was clearly more cloudy and/or wrinkled than the cast film containing no functional material.

### <Evaluation of heat resistance>

The cast film containing the functional material, which was produced in the production (2) of evaluation sample, was placed in a blast constant temperature incubator in which a temperature was set to 170°C, and subjected to a heat treatment for 15 minutes under an air atmosphere. Thereafter, cloudiness and coloration of each cast film, or bleeding of the functional material was visually observed. It was visually evaluated whether or not cloudiness was promoted after heating as compared with before heating, whether or not coloration was promoted after heating as compared with before heating, and whether or not bleeding of the functional material was observed. The results are shown in Tables 1 to 6.

### -Evaluation standard of heat resistance-

OK: after heating, cloudiness was not promoted, coloration was not promoted, or bleeding of the functional material was not observed.

NG: after heating, cloudiness was clearly promoted, coloration was promoted, or bleeding of the functional material was observed.

### <Abrasion resistance test (2)>

Each cast film produced in the production (2) of evaluation sample was attached to S-36 (manufactured by Taber Co., Ltd.) to produce an evaluation sample for an abrasion resistance test.

Each evaluation sample produced above was set in a rotary abrasion tester (manufactured by Toyo Seiki Seisaku-sho, Ltd.), and using a abrasion wheel CS-10 (manufactured by Taber Co., Ltd.), the evaluation sample was rotated 2000 times under conditions of a load of 500 gf and a rotation speed of 60 rpm to carry out an abrasion evaluation test. An abrasion reduction amount (mg/2000 rotations), which was a change in mass of the sample before and after the abrasion evaluation test, was measured. Based on the obtained abrasion reduction amount, abrasion resistance of each photoconductor was evaluated. The results are shown in Tables 1 to 6. The evaluation samples formed from the polymers (1) to (9) were each used as evaluation samples for the abrasion resistance test (2) of Examples 1 to 9, and the evaluation samples formed from the comparative polymers (2) to (15) were each used as evaluation samples for the abrasion resistance test (2) of Comparative Examples 1 to 15. Abrasion resistance of each evaluation sample was evaluated according to the same evaluation standard as the evaluation standard in the abrasion resistance test (1). The results are shown in Tables 1 to 6.

**[Table 1]**

| | Formula (I-A) | | Formula (II) | | Terminal structure | | Mw | Abrasion resistance (1) | Film-forming properties | Heat resistance | Abrasion resistance (2) |
|---|---|---|---|---|---|---|---|---|---|---|---|
| | Structural formula | Content (*) | Structural formula | Content (*) | Structural formula | Content (*) | | | | | |
| Example 1 | 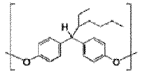 | 58.5 | 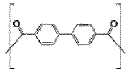 | 41 | 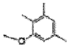 | 0.5 | 130000 | A | OK | OK | A |
| Example 2 | 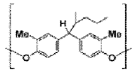 | 58 | 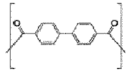 | 41 | 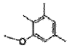 | 1 | 90000 | B | OK | OK | A |
| Example 3 | 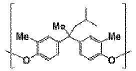 | 58 | 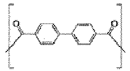 | 41 | 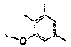 | 1 | 100000 | B | OK | OK | B |
| Example 4 | 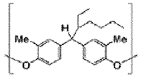 | 60.5 | 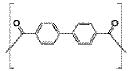 | 39 | 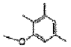 | 0.5 | 130000 | A | OK | OK | A |
| Example 5 | 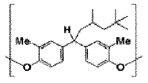 | 61.5 | 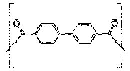 | 38 | 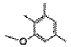 | 0.5 | 140000 | A | OK | OK | B |
| Example 6 | 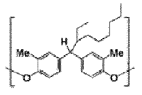 | 62 | 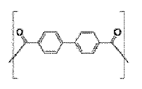 | 37 | 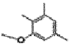 | 1 | 80000 | B | OK | NG | B |

| | | | | | | | | | | | |
|---|---|---|---|---|---|---|---|---|---|---|---|
| (*) content of each polymer in units of % by mass; the same also applies to Tables 2 to 6. | | | | | | | | | | | |

**[Table 2]**

| | Formula (I-B) | | Formula (II) | | Others | | Terminal structure | | Mw | Abrasion resistance (1) | Film-forming properties | Heat resistance | Abrasion resistance (2) |
|---|---|---|---|---|---|---|---|---|---|---|---|---|---|
| | Structural formula | Content (°) | Structural formula | Content (*) | Structural formula | Content (*) | Structural formula | Content (*) | | | | | |
| Example 7 | 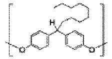 | 61 | 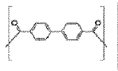 | 39 | - | - | 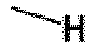 | Less than 0.1 | 110000 | A | OK | NG | A |
| Example 8 | 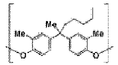 | 59 | 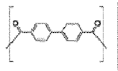 | 40 | - | - | 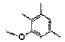 | 1 | 120000 | A | OK | OK | A |
| Example 9 | 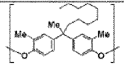 | 63.5 | 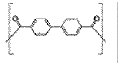 | 36 | - | - | 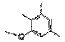 | 0.5 | 130000 | A | OK | NG | A |

**[Table 3]**

| | Formula (II) | | Others, | | Terminal structure | | Mw | Abrasion resistance (1) | Film-forming properties | Heat | Abrasion resistance (2) |
|---|---|---|---|---|---|---|---|---|---|---|---|
| | Structural formula | Content (*) | Structural formula | Content (*) | Structural formula | Content (*) | | | | | |
| Comparative Example 1 | 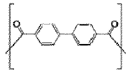 | 46 | 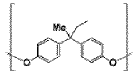 | 54 | 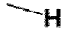 | Less than 0.1 | 80000 | Cannot produce sample | Cannot produce sample | Cannot produce sample | Cannot produce sample |
| Comparative Example a | 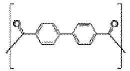 | 4 | 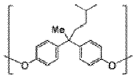 | 55 | 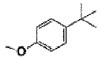 | 1 | 100000 | C | OK | NG | C |
| | | | 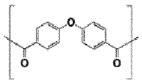 | 40 | | | | | | | |
| Comparative Example 3 | 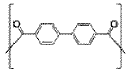 | 21 | 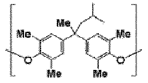 | 66 | 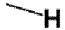 | Less than 0.1 | 60000 | E | OK | OK | E |
| | | | 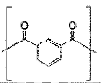 | 13 | | | | | | | |
| Comparative Example 4 | 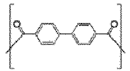 | 21 | 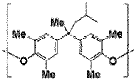 | 66 | 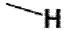 | Less than 0.1 | 50000 | E | OK | OK | E |
| | | | 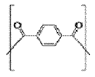 | 13 | | | | | | | |

**[Table 4]**

| | Formula (II) | | Others | | Terminal structure | | Mw | Abrasion resistance (1) | Film- forming properties | Heat resistance | Abrasion resistance (2) |
|---|---|---|---|---|---|---|---|---|---|---|---|
| | Structural formula | Content (*) | Structural formula | Content (*) | Structural formula | Content (*) | | | | | |
| Comparative Example 5 | 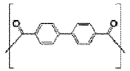 | 31 | 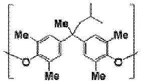 | 63 | 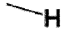 | Less than 0.1 | 90000 | E | OK | OK | E |
| | | | 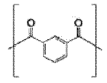 | 6 | | | | | | | |
| Comparative Example 6 | 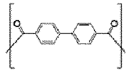 | 31 | 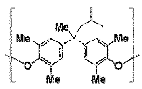 | 63 | 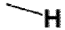 | Less than 0.1 | 80000 | E | OK | OK | E |
| | | | 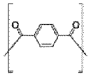 | 6 | | | | | | | |
| Comparative Example 7 | 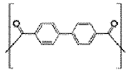 | 45 | 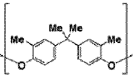 | 54 | 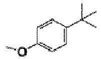 | 1 | 100000 | C | OK | NG | D |

**[Table 5]**

| | Diol unit | | Other dicarboxylic acid units | | Terminal structure | | Mw | Abrasion resistance (1) | Film-forming properties | Heat resistance | Abrasion (2) |
|---|---|---|---|---|---|---|---|---|---|---|---|
| | Structural formula | Content (*) | Structural formula | Content (*) | Structural formula | Content (*) | | | | | |
| Comparative Example 8 | 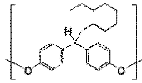 | 7 | 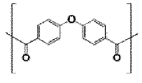 | 47 | 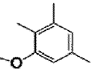 | 1 | 70000 | D | OK | NG | D |
| | 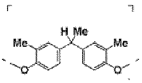 | 45 | | | | | | | | | |
| Comparative Example 9 | 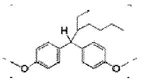 | 68 | 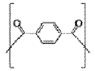 | 31 | 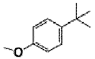 | 1 | 80000 | E | OK | NG | E |
| Comparative Example 10 | 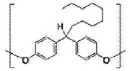 | 70 | 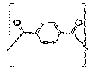 | 29 | 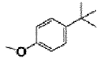 | 1 | 80000 | E | OK | NG | D |
| Comparative Example 11 | 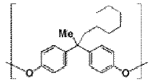 | 70 | 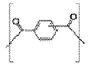 | 30 | 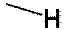 | Less than 0.1 | 40000 | E | OK | NG | E |
| Comparative Example 12 | 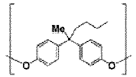 | 67 | 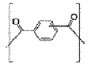 | 33 | 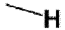 | Less than 0.1 | 60000 | E | OK | NG | E |

**[Table 6]**

| | Diol unit | | Dicarboxylic acid unit | | Terminal structure | | Mw | Abrasion resistance (1) | Film-forming properties | Heat resistance | Abrasion resistance (2) |
|---|---|---|---|---|---|---|---|---|---|---|---|
| | Structural formula | Content (*) | Structural formula | Content (*) | Structural formula | Content (*) | | | | | |
| Comparative Example 13 | 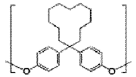 | 72 | 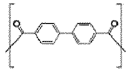 | 27 | 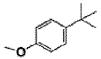 | 1 | 100000 | C | OK | OK | C |
| Comparative Example 14 | 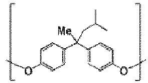 | 65 | 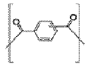 | 32 | 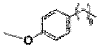 | 3 | 60000 | E | OK | OK | E |
| Comparative Example 15 | 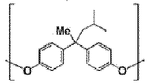 | 62 | 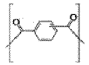 | 31 | 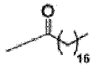 | 7 | 40000 | E | OK | OK | E |

The comparative polymers (1) to (7) and (13) to (15) had none of the structural units represented by Formulae (I-A) and (I-B) described above. In the comparative polymer (2), the content of the structural unit represented by Formula (II) described above was less than 10% by mass. The comparative polymers (8) to (12) did not have the structural unit represented by Formula (II) described above. Further, in the comparative polymer (8), the content of the structural unit represented by Formula (I-B) described above was less than 10% by mass.

The comparative polymer (1) did not have solubility in tetrahydrofuran, and thus a film of the comparative polymer (1) could not be formed. Each cast film formed from each comparative polymer other than the comparative polymer (1) was deteriorated in abrasion resistance. It should be noted that many of the comparative polymers tend to have deteriorated heat resistance in coexistence with the functional material.

On the other hand, each cast film formed from the polymer specified in the present invention was excellent in abrasion resistance, and film-forming properties was excellent even in a case where a large amount of the functional material was present together. Furthermore, the heat resistance of the cast films of Examples 1 to 5, and 8 was also excellent.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2021-082814 filed in Japan on May 14, 2021, the contents of which are incorporated herein by reference, as a part of the description of the present specification.

## Claims

1. A resin composition for coating, comprising:
a polymer having at least one of a structural unit represented by Formula (I-A) or a structural unit represented by Formula (I-B), and having a structural unit represented by Formula (II),
wherein, in the polymer, a total of respective contents of the structural unit represented by Formula (I-A) and the structural unit represented by Formula (I-B) is 10% by mass or more, and a content of the structural unit represented by Formula (II) is 10% by mass or more, 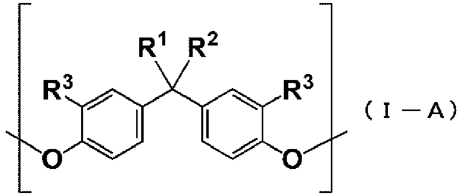
in the formula, R¹ represents an unsubstituted chain-like branched alkyl group having 4 or more carbon atoms,
R² represents a hydrogen atom, a linear alkyl group, or an aryl group,
R³ represents a hydrogen atom, an alkyl group, or an aryl group,
R¹ and R² are not bonded to each other to form a ring structure,
a total number of carbon atoms in R¹ and two R³'s is 6 or more, and
a substituent other than R³ is not present on two benzene rings shown in the formula, 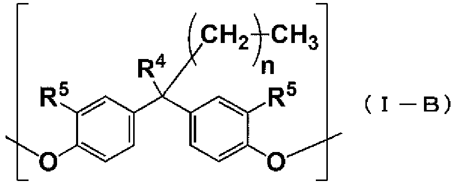
in the formula, R⁴ represents a hydrogen atom, a linear alkyl group, or an aryl group,
n is an integer of 2 to 20,
R⁵ represents a hydrogen atom, an alkyl group, or an aryl group, and
a substituent other than R⁵ is not present on two benzene rings shown in the formula, 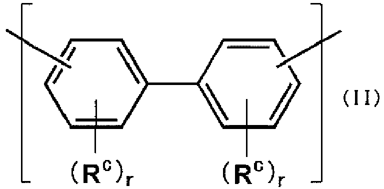
in the formula, R^{c} represents an alkyl group, an aryl group, or a halogen atom, and r is an integer of 0 to 4.

2. The resin composition for coating according to claim 1,
wherein R² in Formula (I-A) is a hydrogen atom or an unsubstituted hydrocarbon group, and
a content of the structural unit represented by Formula (I-A) in the polymer is 10% by mass or more.

3. The resin composition for coating according to claim 2,
wherein the content of the structural unit represented by Formula (I-A) in the polymer is 20% by mass or more.

4. The resin composition for coating according to any one of claims 1 to 3,
wherein at least a part of the structural unit represented by Formula (II) is included in the polymer as a structural unit represented by Formula (II-1), and
a content of the structural unit represented by Formula (II-1) in the polymer is 10% by mass or more, 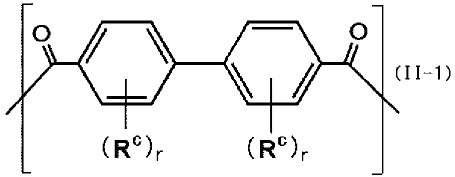
in the formula, R^{c} and r have the same meaning as R^{c} and r in Formula (II), respectively.

5. The resin composition for coating according to claim 4,
wherein the content of the structural unit represented by Formula (II-1) in the polymer is 20% by mass or more.

6. The resin composition for coating according to any one of claims 1 to 5,
wherein, in Formula (I-A), R³ represents a hydrogen atom or an alkyl group having 1 to 4 carbon atoms, and at least one of two R³'s is an alkyl group having 1 to 4 carbon atoms, and
in Formula (I-B), R⁵ represents a hydrogen atom or an alkyl group having 1 to 4 carbon atoms, and at least one of two R⁵'s is an alkyl group having 1 to 4 carbon atoms.

7. The resin composition for coating according to any one of claims 1 to 6,
wherein R¹ has 5 or more carbon atoms.

8. The resin composition for coating according to any one of claims 1 to 6,
wherein n is an integer of 4 to 20.

9. The resin composition for coating according to any one of claims 1 to 8, further comprising:
a solvent.

10. The resin composition for coating according to any one of claims 1 to 9, further comprising:
a functional material consisting of an aromatic ring-containing compound containing a benzene ring,
wherein a mass ratio of a content of the polymer to a content of the functional material is polymer/functional material = 90:10 to 50:50.

11. A polymer comprising:
at least one of a structural unit represented by Formula (I-A) or a structural unit represented by Formula (I-B); and
a structural unit represented by Formula (II),
wherein a total of respective contents of the structural unit represented by Formula (I-A) and the structural unit represented by Formula (I-B) is 10% by mass or more, and
a content of the structural unit represented by Formula (II) is 10% by mass or more, 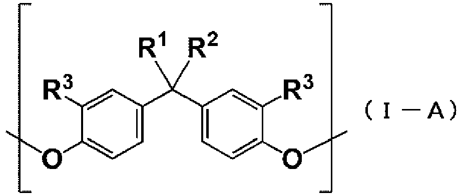
in the formula, R¹ represents an unsubstituted chain-like branched alkyl group having 4 or more carbon atoms,
R² represents a hydrogen atom, a linear alkyl group, or an aryl group,
R³ represents a hydrogen atom, an alkyl group, or an aryl group,
R¹ and R² are not bonded to each other to form a ring structure,
a total number of carbon atoms in R¹ and two R³'s is 6 or more, and
a substituent other than R³ is not present on two benzene rings shown in the formula, 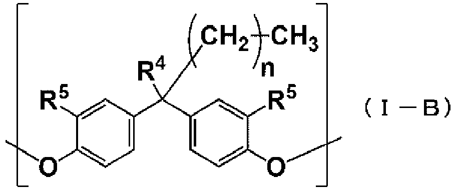
in the formula, R⁴ represents a hydrogen atom, a linear alkyl group, or an aryl group,
n is an integer of 2 to 20,
R⁵ represents a hydrogen atom, an alkyl group, or an aryl group, and
a substituent other than R⁵ is not present on two benzene rings shown in the formula, 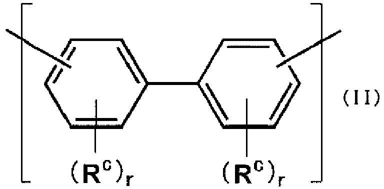
in the formula, R^{c} represents an alkyl group, an aryl group, or a halogen atom, and r is an integer of 0 to 4.

12. A method for producing a polymer, comprising:
a step of mixing a mixture containing an alkaline aqueous solution of dihydric phenol and an organic solvent with solid 4,4'-biphenyldicarbonyl chloride,
wherein the polymer includes at least one of a structural unit represented by Formula (I-A) or a structural unit represented by Formula (I-B) and a structural unit represented by Formula (II-2),
a total of respective contents of the structural unit represented by Formula (I-A) and the structural unit represented by Formula (I-B) is 10% by mass or more, and
a content of the structural unit represented by Formula (II-2) is 10% by mass or more, 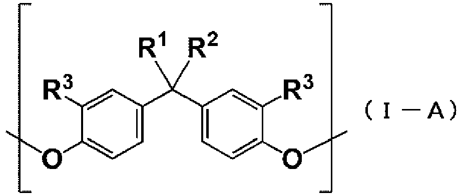
in the formula, R¹ represents an unsubstituted chain-like branched alkyl group having 4 or more carbon atoms,
R² represents a hydrogen atom, a linear alkyl group, or an aryl group,
R³ represents a hydrogen atom, an alkyl group, or an aryl group,
R¹ and R² are not bonded to each other to form a ring structure,
a total number of carbon atoms in R¹ and two R³'s is 6 or more, and
a substituent other than R³ is not present on two benzene rings shown in the formula, 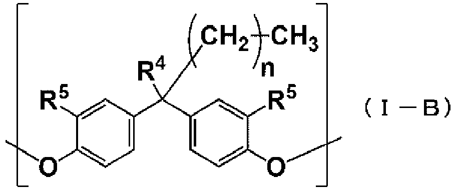
in the formula, R⁴ represents a hydrogen atom, a linear alkyl group, or an aryl group,
n is an integer of 2 to 20,
R⁵ represents a hydrogen atom, an alkyl group, or an aryl group, and
a substituent other than R⁵ is not present on two benzene rings shown in the formula,

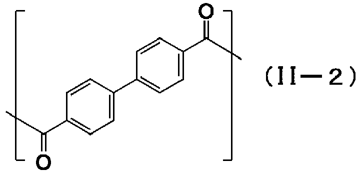

13. A coating film comprising:
the polymer according to claim 11.

14. A method for forming a coating film, comprising:
coating a substrate with the resin composition for coating according to any one of claims 1 to 10.
